# FASCICULE DE BREVET EUROPEEN

(11) **EP 4 134 306 B1**
(45) Date de publication et mention de la délivrance du brevet: **19.11.2025**
(21) Numéro de dépôt: 22187313.6
(22) Date de dépôt: 27.07.2022
(51) Int. Cl.: B64D 1/12, B64D 1/22, B64U 10/16, B64U 101/40

(54) **DRONE, DISPOSITIF AUXILIAIRE POUR UN TEL DRONE ET ENSEMBLE DRONE-OUTIL**
DROHNE, HILFSVORRICHTUNG FÜR EINE SOLCHE DROHNE UND DROHNEN-WERKZEUGEINHEIT
DRONE, AUXILIARY DEVICE FOR SUCH A DRONE AND DRONE-TOOL ASSEMBLY

(30) Priorité: 12.08.2021 FR 2108652
(43) Date de publication de la demande: 15.02.2023
(73) Titulaire: Services Innovants Du Patrimoine Arbore, 57370 Phalsbourg (FR)
(72) Inventeur: HOLTZINGER, Sven, 57370 PHALSBOURG (FR)
(74) Mandataire: Cabinet Bleger-Rhein-Poupon

(56) Documents cités:
- CN-U- 211 494 463
- ES-A1- 2 614 994
- US-A1- 2019 061 944
- US-A1- 2019 092 468
- US-A1- 2020 023 972

## Description

La présente invention concerne un drone, un dispositif auxiliaire pour un tel drone et ensemble drone-outil comprenant un tel drone et un tel dispositif auxiliaire.

De tels drones sont en général des aéronefs sans équipage dont le pilotage est automatique ou télécommandé.

Un tel dispositif auxiliaire peut comporter un outil pour un entretien de végétaux et/ou d'arbres, en particulier pour une taille d'arbres, pour une prise de vue aérienne d'arbres, en particulier une reconnaissance, une cartographie et/ou une thermographie de végétaux, en particulier d'arbres. L'outil peut être adapté pour un entretien de végétaux et/ou d'arbres aux abords de lignes très hautes HTB et hautes tensions HTA, partant des lignes BT des fournisseurs et transporteurs d'énergie électriques. L'outil peut être en outre adapté pour un entretien de végétaux et/ou d'arbres aux abords de lignes de transport de signaux informatiques, radios, visuels et similaires via des lignes physiques dédiées.

Dans le contexte de lignes HTB et HTA, on peut, selon la règlementation française, distinguer au moins trois catégories de situations U₀, U₁ et U₂. Dans la situation dite U₂, la végétation est à une distance minimale de 200 cm de la ligne. Dans la situation U₂, la coupe de la végétation peut se faire depuis le sol sous condition que la coupe se fasse à une distance minimale de 300 cm de la ligne. Dans la situation dite U₁, la végétation est à une distance entre 60 cm et 200 cm de la ligne. Dans la situation U₁, une coupe de la végétation peut se faire depuis le sol sous condition que la coupe soit effectuée à l'aide d'un engin terrestre à bras isolé. Dans la situation dite U₀, la végétation est à une distance entre 0 et 60 cm de la ligne. Dans la situation U₀, une coupe de la végétation ne peut pas se faire depuis le sol, tant que la ligne est sous tension. Dans la situation U₀, tant que la ligne est sous tension, la coupe de la végétation ne peut pas se faire à l'aide d'un engin terrestre ou par quelconque autre moyen relié à la terre. La coupe de la végétation requière ainsi un minimum de distance pour éviter les arcs électriques en fonction de la situation.

A ce jour, ces travaux d'entretien de végétaux et/ou d'arbres sont réalisés coûteusement de façon manuelle dans les endroits inaccessibles aux machines terrestres et/ou mécaniquement avec du matériel lourd dans sa mise en œuvre et ses déplacements.

Quant à la dépose de masses giratoires pour éviter les ruptures de lignes par accumulation de givre, partant de glace ; cette dépose est en général exécutée manuellement par des techniciens spécialisés circulant sur les lignes, avec toutes les contraintes logistiques de transport terrestre et / ou aérien, d'acheminement des matériels et des personnes, de coupure de réseau.

A cela s'ajoutent les contraintes pour respecter l'ensemble des règlementations relatives à la conception et à l'utilisation des aéronefs civils qui circulent sans aucune personne à bord et relatives aux catégories ne nécessitant pas de dérogations ou de permissions spécifiques, pouvant effectuer des travaux aériens ; une limite légale de 25 kg doit être respectée.

En outre, dans un tel contexte, un tel ensemble drone-outil présente un risque d'interférences électromagnétiques entre les lignes (HTA, HTB, BT et lignes de transport de signaux informatiques) et des composants électroniques du drone et/ou du dispositif auxiliaire. Par ailleurs, un tel drone-outil présente le risque de surcharges d'efforts supérieures aux tolérances dynamiques et statiques induites par l'outil ou les conditions atmosphériques.

Le document US 2020/0367441 A1 divulgue un drone, auquel est attaché un outil à l'aide d'un système de fixation. Le système de fixation comporte un dispositif de relâche de l'outil.

Le document CN 211494463 U divulgue un drone correspondant au préambule de la revendication 1.

La présente invention a pour but de proposer un drone-outil permettant de faciliter l'entretien de végétaux et/ou d'arbres, en particulier, lorsque ces derniers sont situés à proximité d'une ligne électrique et/ou dans des endroits inaccessibles aux machines terrestres, ainsi que d'éviter les désavantages précités.

A cet effet, la présente invention concerne un drone comportant un châssis, au moins deux rotors reliés au châssis et un moyen de pilotage relié au châssis et pourvu d'un moyen de commande apte à commander les au moins deux rotors, le drone comportant en outre un dispositif d'arrimage apte à être fixé de manière réversible à un moyen d'arrimage d'un dispositif auxiliaire, le drone étant caractérisé en ce que le dispositif d'arrimage est soit un verrou d'arrimage électromagnétique apte à recevoir un crochet d'arrimage du moyen d'arrimage de manière réversible, soit un crochet d'arrimage apte à être reçu dans un verrou d'arrimage électromagnétique du moyen d'arrimage de manière réversible.

Le drone conforme à l'invention permet d'entretenir des espaces arborés jouxtant ou se situant sous des lignes de transports d'énergies électriques ou d'ondes électromagnétiques plus particulièrement inabordables avec des moyens mécaniques terrestres.

En outre, le drone conforme à l'invention permet l'arrimage et le guidage d'un outil de coupe capable de faire une taille de végétation et/ou un élagage d'espace arboré avec des branches jouxtant latéralement ou en dessous des dites lignes HTB, HTA.

Le drone selon l'invention permet la fixation réversible d'un dispositif auxiliaire à celui-ci. Ainsi, le drone peut être aisément équipé d'un dispositif auxiliaire et être adapté à la nature des travaux à effectuer.

Selon une possibilité, le verrou d'arrimage électromagnétique comporte un pêne ainsi qu'un servomoteur apte à déplacer le pêne entre une position ouverte, dans laquelle le crochet d'arrimage est déverrouillé, et une position fermée, dans laquelle le crochet d'arrimage est verrouillé.

Le drone peut en outre comprendre au moins un système GPS de positionnement et de contrôle de positionnement et/ou au moins une caméra connectée pour la visualisation du site d'intervention et le visuel des travaux.

Selon une caractéristique additionnelle possible, le moyen de pilotage du drone peut être apte à communiquer avec le verrou d'arrimage et être apte à générer une commande de déverrouillage. De façon préférentielle, le verrou peut être adapté à lâcher le verrou d'arrimage suite à la réception d'une commande de déverrouillage.

Un tel verrou d'arrimage peut permettre au drone un largage du dispositif auxiliaire en plein vol et faciliter et/ou permettre d'aisément attacher et/ou détacher le dispositif auxiliaire du drone, lorsque ce dernier repose sur le sol par exemple, notamment au départ ou à la fin des opérations à effectuer par l'ensemble drone-outil.

Ce dispositif d'arrimage permet l'arrimage du dispositif auxiliaire. Le dispositif d'arrimage autorise, avec le moyen d'arrimage du dispositif auxiliaire, un verrouillage/déverrouillage manuel au sol. Les verrouillages peuvent être commandés avec au moins le dispositif auxiliaire au sol, tandis que les déverrouillages peuvent être commandés ou automatiques, au sol comme en vol. Les déverrouillages automatiques peuvent être effectués en réponse à des détections, soit de positionnement du crochet d'arrimage dans le verrou d'arrimage, soit d'un risque majeur et/ou d'une urgence.

Conformément à une variante de réalisation préférentielle, le drone comporte en outre un dispositif de connexion apte à être relié à un moyen de connexion du moyen d'arrimage lorsque le dispositif d'arrimage est fixé au moyen d'arrimage, c'est-à-dire lorsque le dispositif auxiliaire est fixé au drone.

Selon une possibilité, le dispositif de connexion est apte à être automatiquement relié au moyen de connexion du moyen d'arrimage lorsque le dispositif d'arrimage est fixé au moyen d'arrimage, c'est-à-dire lorsque le dispositif auxiliaire est fixé au drone. De façon alternative, le dispositif de connexion peut être apte à être relié manuellement au moyen de connexion du moyen d'arrimage.

Selon une caractéristique additionnelle possible, le dispositif de connexion peut être un dispositif de connexion de communication filaire, de préférence un dispositif de connexion de communication filaire blindée et/ou un dispositif de connexion de communication sans fil, c'est-à-dire de préférence un dispositif de connexion de communication par radiofréquence. Le dispositif de connexion de communication filaire blindée permet d'éviter une induction électromagnétique issue de la ligne via les liaisons filaires.

Selon une possibilité, le dispositif de connexion peut permettre l'établissement d'un lien de communication entre le moyen de pilotage du drone et un système de commande du dispositif auxiliaire. Préférentiellement, le moyen de pilotage du drone et/ou le système de commande du dispositif auxiliaire peut/peuvent être adaptés pour permettre l'établissement automatique du lien de communication entre le moyen de pilotage du drone et un système de commande du dispositif auxiliaire lorsque le dispositif d'arrimage est fixé au moyen d'arrimage.

Ainsi, l'assemblage du drone-outil peut être facilité.

Selon une caractéristique additionnelle possible, le châssis peut être au moins partiellement fabriqué en un matériau composite et/ou isolant, de préférence en fibre de verre et/ou en fibre de carbone.

Ainsi, le poids du châssis et en conséquence le poids du drone peut être réduit.

Le drone selon l'invention est apte à prendre en charge l'arrimage de différents dispositifs auxiliaires pour performer les applications précitées.

Le drone selon l'invention est capable de respecter la réglementation et d'emporter une charge dynamique importante. En restant en dessous d'une masse totale du drone et de sa charge de 25 kg, le drone selon l'invention permet d'éviter l'obligation du dépôt d'une demande de conception de type auprès de la Direction générale de l'Aviation civile (DGAC) avant son usage.

L'invention a également pour objet un dispositif auxiliaire pour un drone selon l'invention, comportant un moyen d'arrimage pourvu soit d'un crochet d'arrimage apte à être reçu de manière réversible dans le verrou d'arrimage, soit d'un verrou d'arrimage électromagnétique apte à recevoir le crochet d'arrimage du dispositif d'arrimage de manière réversible, le dispositif auxiliaire comprenant en outre un outil, de préférence un outil d'élagage ou un outil de dépôt d'un agent antigivre.

Selon une caractéristique additionnelle possible de l'invention, le verrou d'arrimage électromagnétique du dispositif auxiliaire comporte un pêne ainsi qu'un servomoteur apte à déplacer le pêne entre une position ouverte, dans laquelle le crochet d'arrimage du dispositif d'arrimage est déverrouillé, et une position fermée, dans laquelle le crochet d'arrimage du dispositif d'arrimage est verrouillé.

Selon une possibilité, l'outil d'élagage peut comprendre au moins une scie circulaire.

Conformément à une variante de réalisation préférentielle, l'outil d'élagage peut comprendre au moins un sécateur, de préférence pourvu d'au moins une mâchoire.

Selon une caractéristique additionnelle possible, l'outil de dépôt d'un agent antigivre est apte à reposer sur au moins une ligne, apte à être déplacé le long de la ligne et/ou apte à déposer, à déplacer l'agent antigivre, de préférence un moyen antigivre sur la ligne. L'outil de dépôt d'un agent antigivre peut comporter un dispositif d'accrochage de l'outil sur la ligne pourvu d'au moins une gorge apte à recevoir un tronçon de la ligne lorsque l'outil de dépôt d'un agent antigivre repose sur la ligne.

Le dispositif auxiliaire selon l'invention permet sa fixation réversible à un drone conforme à l'invention. Ainsi, le drone peut être aisément équipé d'un dispositif auxiliaire et être adapté à la nature des travaux à effectuer.

Selon une caractéristique additionnelle possible, le dispositif auxiliaire comporte en outre un moyen de connexion apte à être relié à un dispositif de connexion du drone lorsque le dispositif d'arrimage est fixé au moyen d'arrimage.

Ainsi, l'assemblage du drone-outil peut être facilité.

Par ailleurs, selon une possibilité, le dispositif auxiliaire comporte en outre une perche, le moyen d'arrimage étant agencé sur une première extrémité de la perche.

D'autre part, conformément à un mode de réalisation préféré, l'outil est agencé sur une deuxième extrémité de la perche, opposée à la première extrémité.

Selon une caractéristique additionnelle possible, la perche est une perche télescopique. La perche peut être adaptée pour permettre de garder une distance de sécurité entre la végétation et le drone.

Ces caractéristiques permettent de garder le drone à une distance de sécurité d'arc électrique d'au moins un mètre de la ligne HTB le cas échéant mais aussi de permettre une hauteur d'élagage accrue voire doublée sans nécessité pour le pilote de monter ou descendre le drone ou d'être obligé de faire plusieurs passes. Cette solution est aussi avantageuse dans l'ébranchage de tronc.

Dans son application verticale d'élagage la perche télescopique permet d'augmenter la hauteur de l'amplitude de la taille. Dans son application horizontale d'écrêtage ou d'écimage la perche télescopique permet d'augmenter la largeur de l'amplitude d'écrêtage.

Conformément à une variante de réalisation préférentielle, la perche est au moins partiellement fabriquée en un matériau composite et/ou isolant, de préférence en fibre de verre.

Le dispositif auxiliaire comporte en outre un chariot sur lequel repose l'outil et/ou la perche en une position horizontale du dispositif auxiliaire.

Ainsi, un tel chariot permet de faciliter le décollage du drone pourvu d'un dispositif auxiliaire.

Selon un mode préférentiel de l'invention, le chariot est apte à protéger l'outil et/ou être posé sur le sol pour soutenir l'outil et/ou la perche en une position horizontale du dispositif auxiliaire. Le chariot peut présenter, dans le sens de la longueur du dispositif auxiliaire et/ou de la perche, une section transversale essentiellement en forme de "C".

Selon une possibilité, le chariot peut comprendre au moins une roue, de préférence une roue souple, sur laquelle repose le chariot dans la position horizontale du dispositif auxiliaire.

De façon additionnelle ou alternative, le chariot peut présenter une forme de ski reposant sur le sol dans la position horizontale du dispositif auxiliaire.

Selon une possibilité, le chariot peut être pourvu d'un vérin pneumatique permettant son déploiement.

Selon une caractéristique additionnelle possible, le dispositif auxiliaire peut être pourvu d'un moyen d'accueil guidé de branches vers l'outil et un moyen d'évitement d'accrochage de la coupe qui s'évacue par gravité. Selon une possibilité, le moyen d'accueil guidé de branches vers la scie peut être réglable en inclinaison et solidaire d'un carénage de l'outil.

Préférentiellement, le chariot peut en outre être adapté pour permettre la préhension de grosses branches afin d'optimiser la coupe de l'arbre et/ou pour permettre la saisie d'une touffe de branchage feuillue de l'arbre afin d'optimiser le volume de coupe.

Selon une caractéristique additionnelle possible, le chariot peut être rendu solidaire et inamovible de l'outil, par exemple pour faciliter son transport sur site par drone si besoins.

L'invention a également pour objet un ensemble drone-outil comprenant un drone selon l'invention et un dispositif auxiliaire selon l'invention, le dispositif d'arrimage du drone étant fixé au moyen d'arrimage du dispositif auxiliaire, le crochet d'arrimage étant reçu de manière réversible dans le verrou d'arrimage électromagnétique.

L'invention a également pour objet un procédé de pilotage d'un ensemble drone-outil selon l'invention. Le procédé est caractérisé en ce qu'il comporte une étape d'arrimage consistant à fixer le dispositif d'arrimage du drone au moyen d'arrimage du dispositif auxiliaire, le crochet d'arrimage étant reçu de manière réversible dans le verrou d'arrimage électromagnétique.

Selon une possibilité, le procédé comporte une étape de largage du dispositif auxiliaire consistant à détacher le dispositif d'arrimage du drone du moyen d'arrimage du dispositif auxiliaire, le crochet d'arrimage étant lâché du verrou d'arrimage électromagnétique.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig.1] est une représentation d'un schéma électrique d'un drone-outil selon le mode de réalisation ;
[Fig.2a] est un schéma représentant les actions du drone-outil lors d'une perte de liaison selon le mode de réalisation ;
[Fig.2b] est un schéma représentant les actions du drone-outil lors d'une perte de contrôle du drone selon le mode de réalisation ;
[Fig.2c] est un schéma représentant les actions du drone-outil lors d'une perte de liaison GPS selon le mode de réalisation ;
[Fig.3a] est un schéma représentant les actions du drone-outil lorsque le drone est attiré par une ligne selon le mode de réalisation ;
[Fig.3b] est un schéma représentant les actions du drone-outil lorsque l'outil est bloqué dans la ligne selon le mode de réalisation ;
[Fig.3c] est un schéma représentant les actions du drone-outil lorsque l'outil est bloqué dans un arbre selon le mode de réalisation ;
[Fig.4] est une représentation schématique d'une vue de dessous du drone-outil selon le mode de réalisation préféré ;

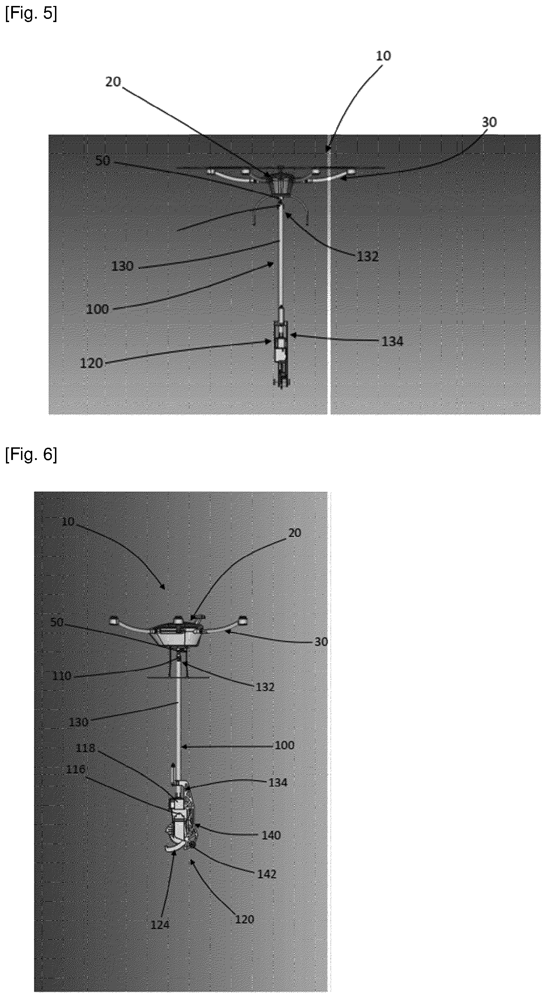

[Fig.5] est une représentation schématique d'une vue latérale du drone-outil selon le mode de réalisation préféré ;
[Fig.6] est une autre représentation schématique d'une vue latérale du drone-outil selon le mode de réalisation préféré ;
[Fig.7] est une représentation schématique d'une vue de dessus du drone-outil selon le mode de réalisation préféré ;
[Fig.8] est une autre représentation schématique d'une vue latérale du drone-outil selon le mode de réalisation préféré ;

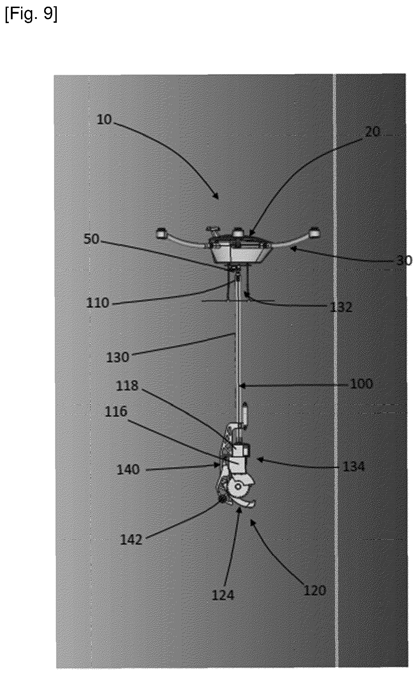

[Fig.9] est une autre représentation schématique d'une vue latérale du drone-outil selon le mode de réalisation préféré ;

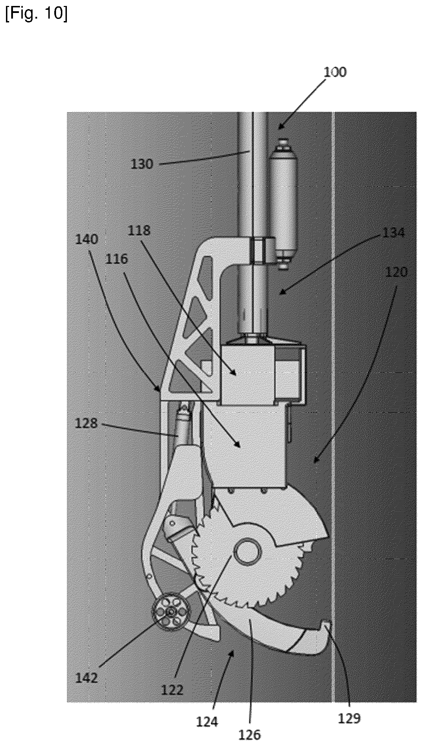

[Fig.10] est une vue détaillée d'un outil d'un dispositif auxiliaire du drone-outil selon le mode de réalisation préféré ;

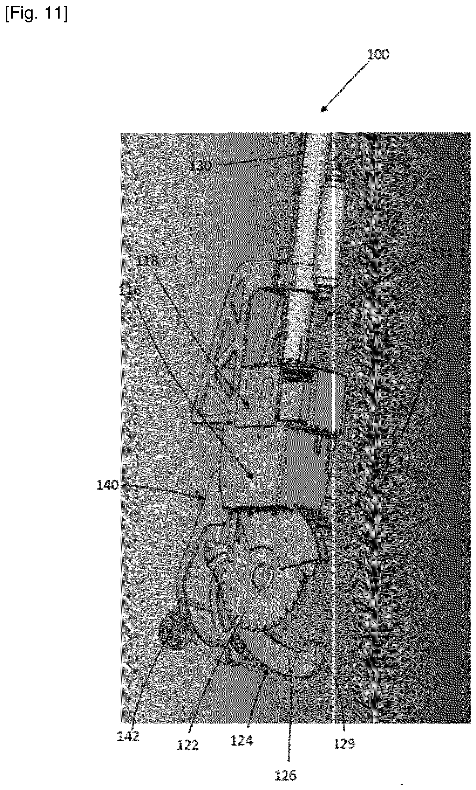

[Fig.11] est une autre vue détaillée de l'outil du dispositif auxiliaire du drone-outil selon le mode de réalisation préféré ;

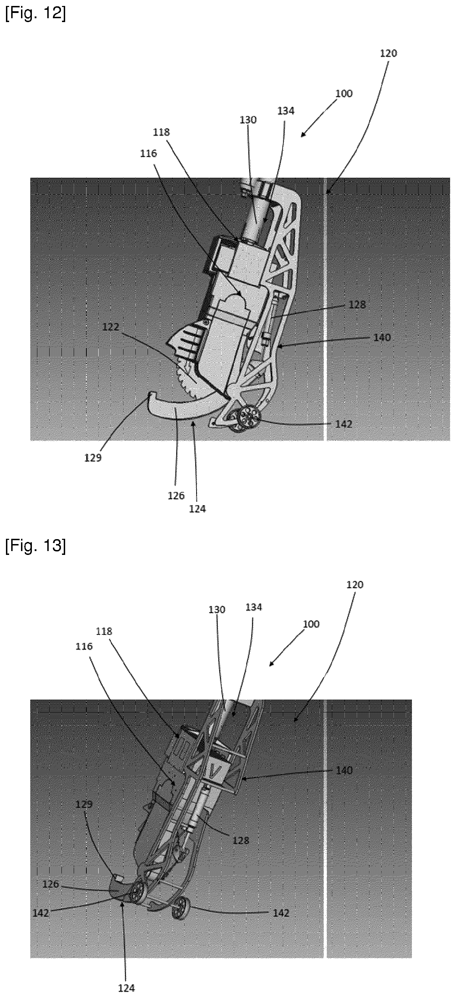

[Fig.12] est une autre vue détaillée de l'outil du dispositif auxiliaire du drone-outil selon le mode de réalisation préféré ;
[Fig.13] est une autre vue détaillée de l'outil du dispositif auxiliaire du drone-outil selon le mode de réalisation préféré ;

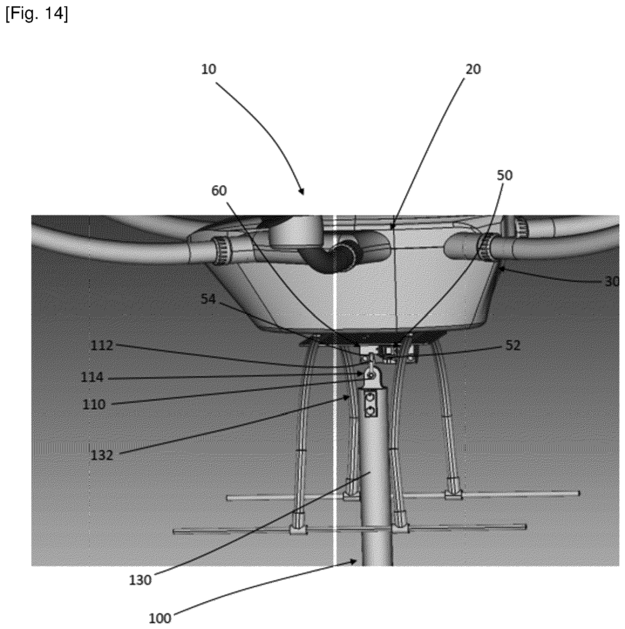

[Fig.14] est une vue détaillée d'un dispositif d'arrimage du drone selon le mode de réalisation préféré ; et

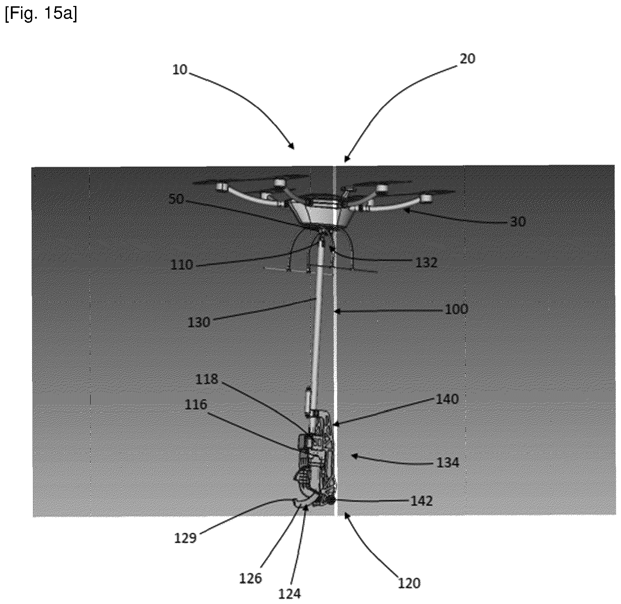

[Fig.15a] est une représentation schématique d'une vue en perspective du drone-outil selon le mode de réalisation préféré ;

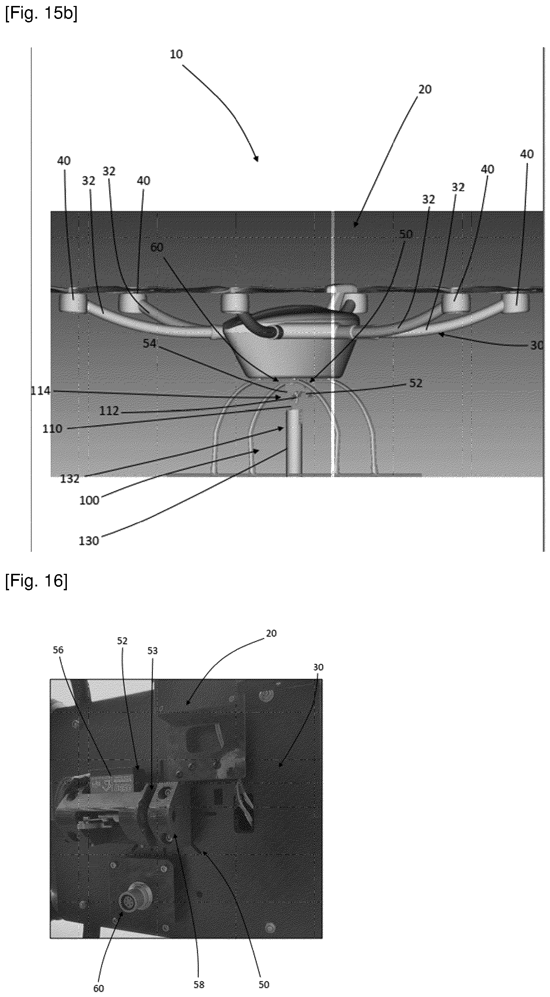

[Fig.15b] est une vue détaillée du drone-outil représenté dans la [Fig.15a] ;
[Fig.16] est une vue détaillée du dispositif d'arrimage du drone selon le mode de réalisation préféré dans une première variante ;

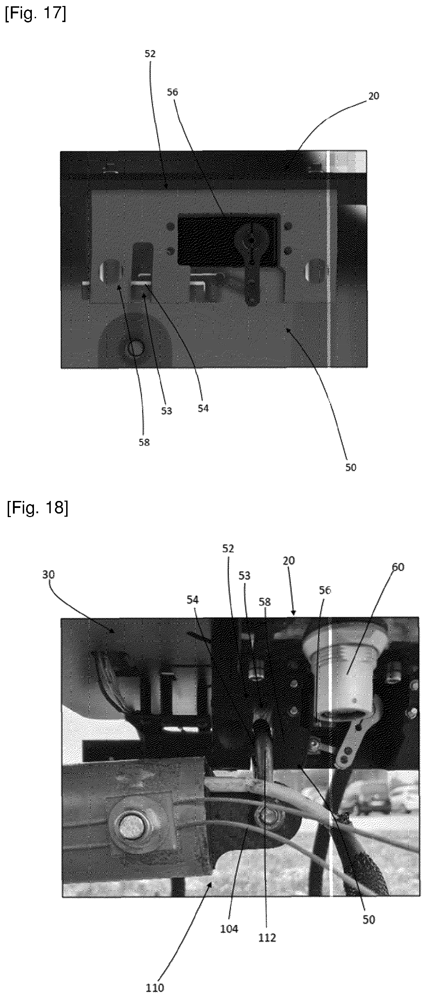

[Fig.17] est une vue schématisée du dispositif d'arrimage du drone selon le mode de réalisation préféré dans la première variante ;
[Fig.18] est une vue détaillée du dispositif d'arrimage du drone selon le mode de réalisation préféré auquel est fixé un moyen d'arrimage du dispositif auxiliaire dans la première variante ;

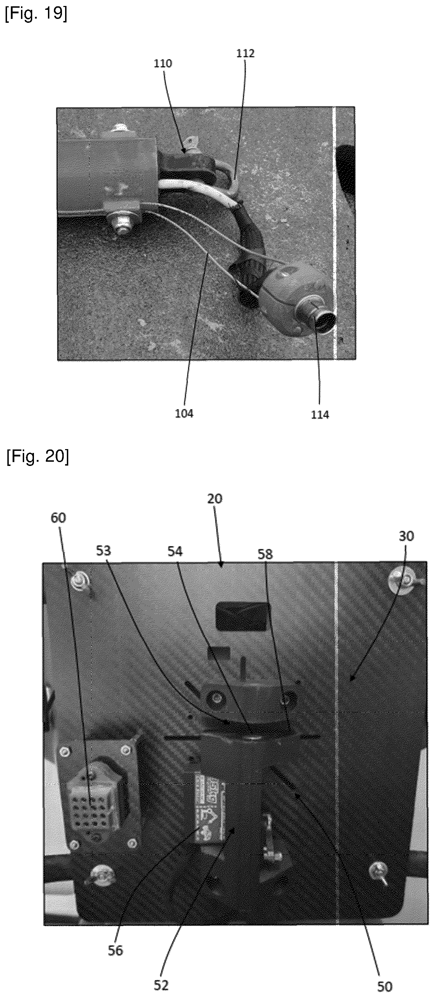

[Fig.19] est une vue détaillée du moyen d'arrimage du dispositif auxiliaire selon le mode de réalisation préféré dans la première variante ;
[Fig.20] est une vue détaillée du dispositif d'arrimage du drone selon le mode de réalisation préféré dans une deuxième variante ;

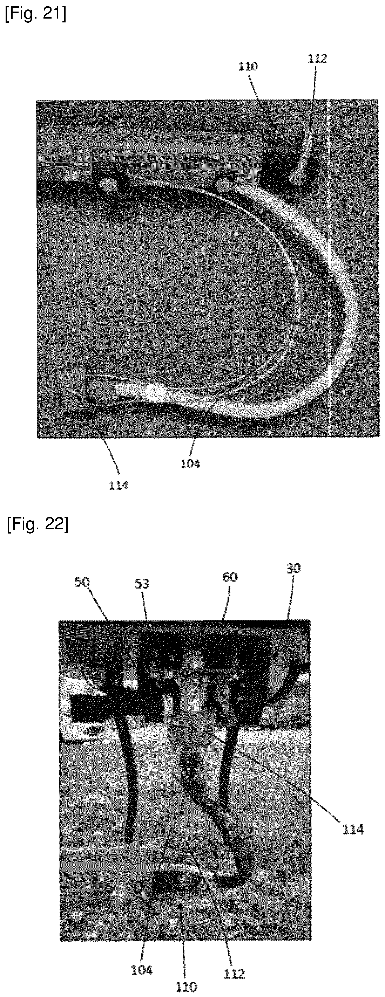

[Fig.21] est une vue détaillée du moyen d'arrimage du dispositif auxiliaire selon le mode de réalisation préféré dans la deuxième variante ;
[Fig.22] est une vue détaillée du dispositif d'arrimage du drone selon le mode de réalisation préféré auquel est fixé un moyen d'arrimage du dispositif auxiliaire dans la deuxième variante ;
[Fig.23] est une représentation schématique d'une vue en perspective du drone-outil selon le mode de réalisation préféré ;
[Fig.24] est une vue représentant un détail du dispositif auxiliaire selon le mode de réalisation préféré ;
[Fig.25] est une vue représentant le dispositif auxiliaire selon le mode de réalisation préféré dans une position repliée ;

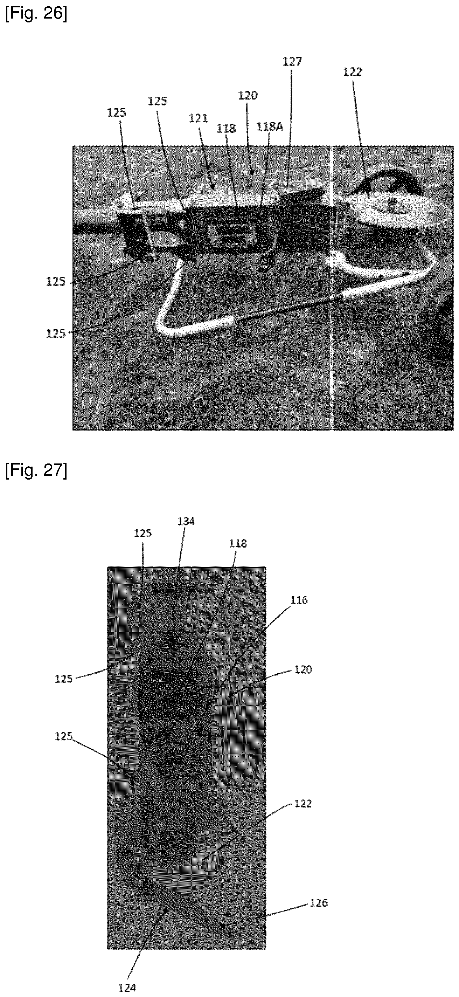

[Fig.26] est une vue représentant un détail du dispositif auxiliaire selon le mode de réalisation préféré ;
[Fig.27] est une vue détaillée de l'outil du dispositif auxiliaire selon le mode de réalisation préféré, dans laquelle une coque du dispositif auxiliaire est représenté en semi-transparent ;

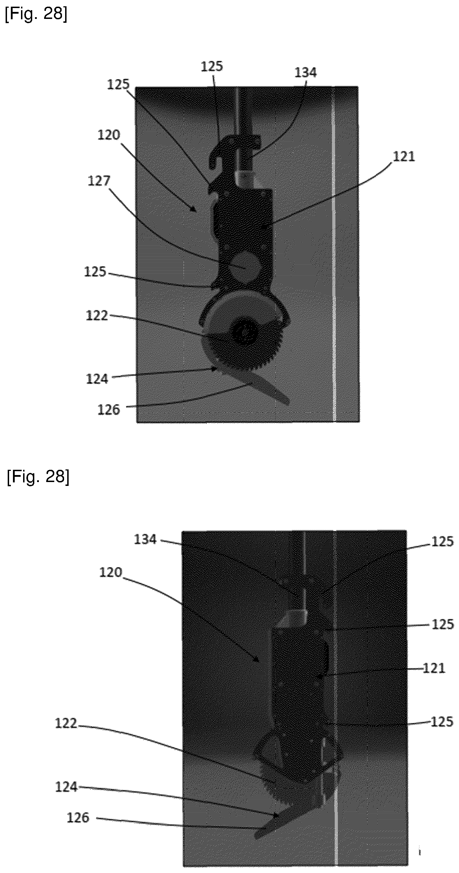

[Fig.28] et [Fig.29] sont des vues détaillées de l'outil du dispositif auxiliaire selon le mode de réalisation préféré ;
[Fig.30A], [Fig.30B], [Fig.30C] et [Fig.30D] sont des représentations schématiques du dispositif drone-outil selon le mode de réalisation préféré visualisant un décollage du dispositif drone-outil ;
[Fig.31] est une représentation schématique d'une première télécommande du drone selon le mode de réalisation préféré ;

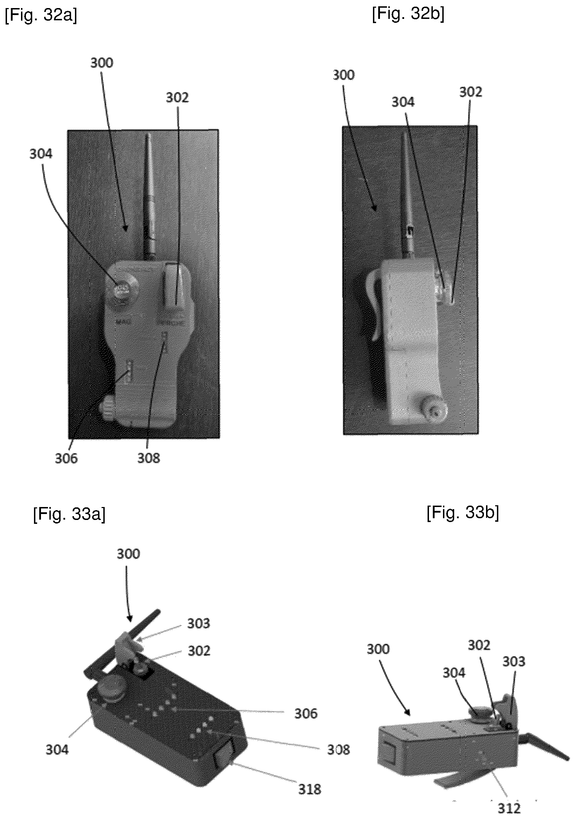

[Fig.32A] et [Fig.32B] est une représentation schématique d'une deuxième télécommande du dispositif auxiliaire selon le mode de réalisation préféré ;
[Fig.33A] et [Fig.33B] est une représentation schématique d'une variante d'une deuxième télécommande du dispositif auxiliaire selon le mode de réalisation préféré ;

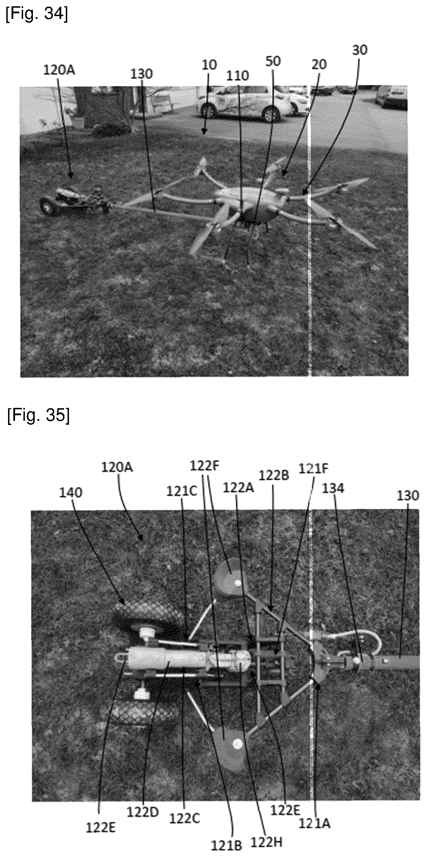

[Fig.34] est une représentation schématique d'une vue en perspective du drone-outil selon le mode de réalisation préféré, dans lequel le dispositif auxiliaire est pourvu d'un outil de dépôt d'un agent antigivre ;

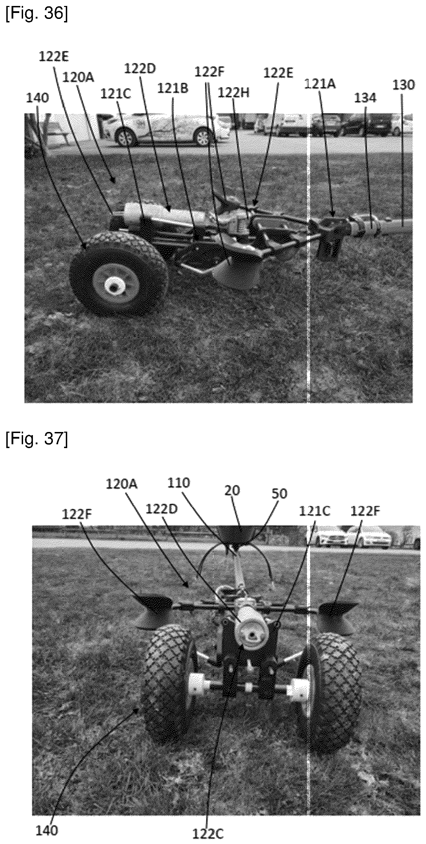

[Fig.35], [Fig.36] et [Fig.37] sont des représentations schématiques du dispositif auxiliaire du drone-outil représenté dans la figure 34 ;

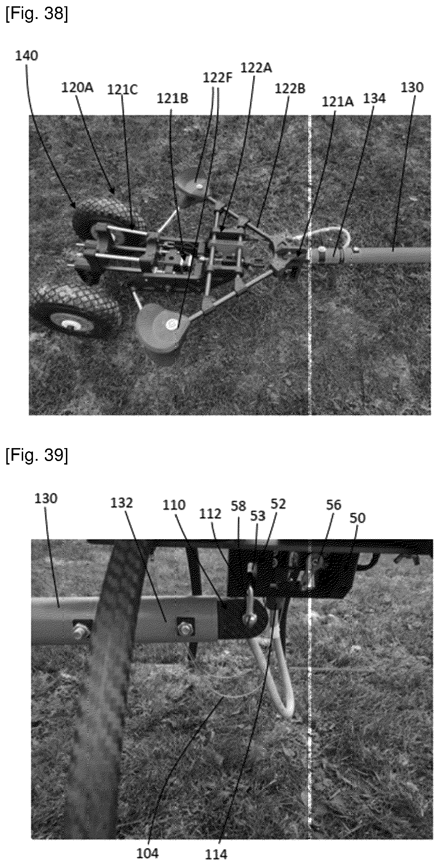

[Fig.38] est une représentation schématique du dispositif auxiliaire du drone-outil représenté dans la figure 34, dans lequel un moyen antigivre du dispositif auxiliaire a été ôté d'un magasin du dispositif auxiliaire ;
[Fig.39] est une vue détaillée du dispositif d'arrimage du drone-outil représenté dans la figure 34 auquel est fixé un moyen d'arrimage du dispositif auxiliaire ;
[Fig.40] et [Fig.41] sont des vues détaillées illustrant un verrouillage et un déverrouillage du dispositif auxiliaire du chariot du drone-outil représenté dans la figure 34 ;

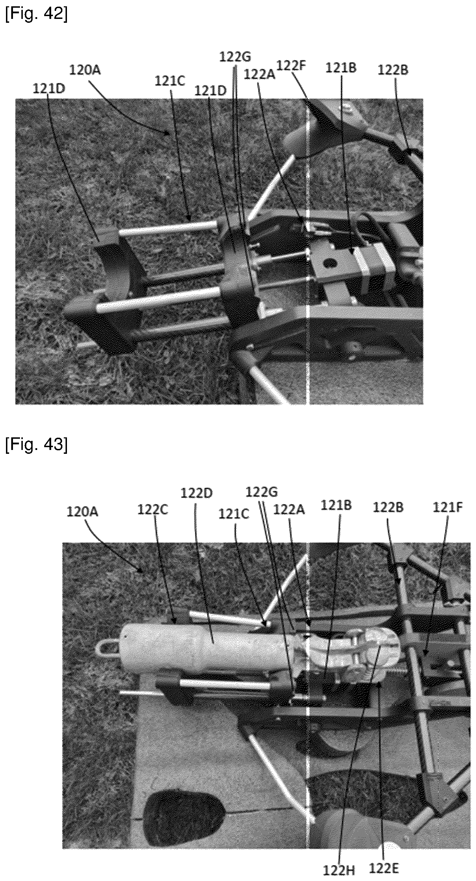

[Fig.42] est une vue détaillée de l'outil du dispositif auxiliaire de l'ensemble drone outil représenté dans la figure 34, dans lequel le moyen antigivre du dispositif auxiliaire a été ôté du magasin du dispositif auxiliaire ; et

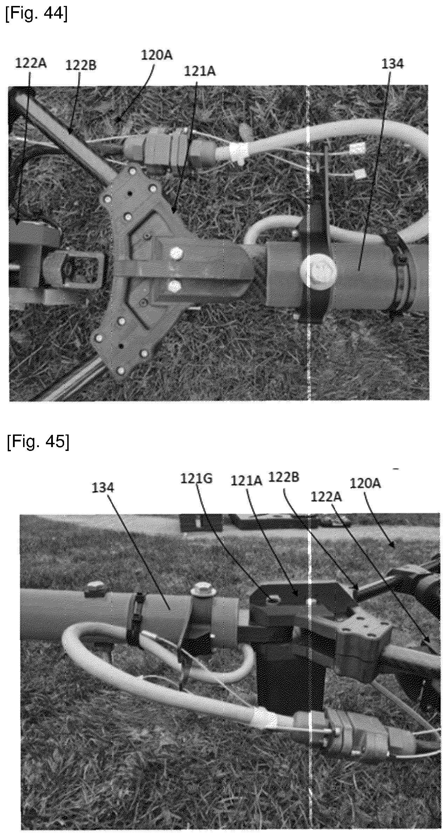

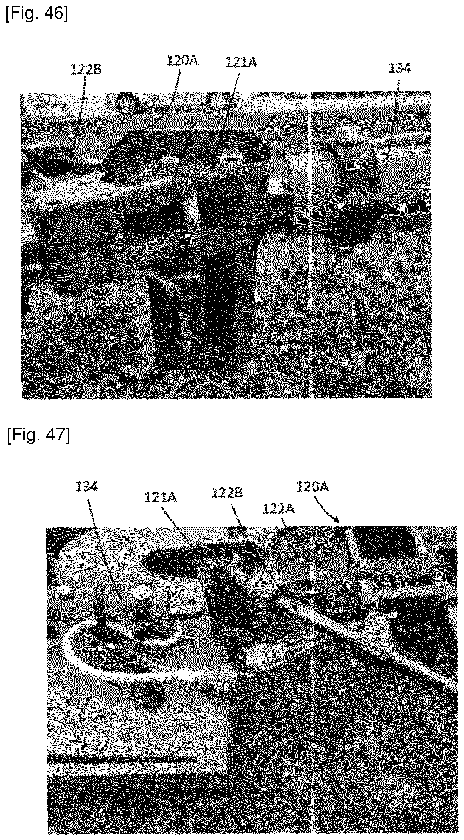

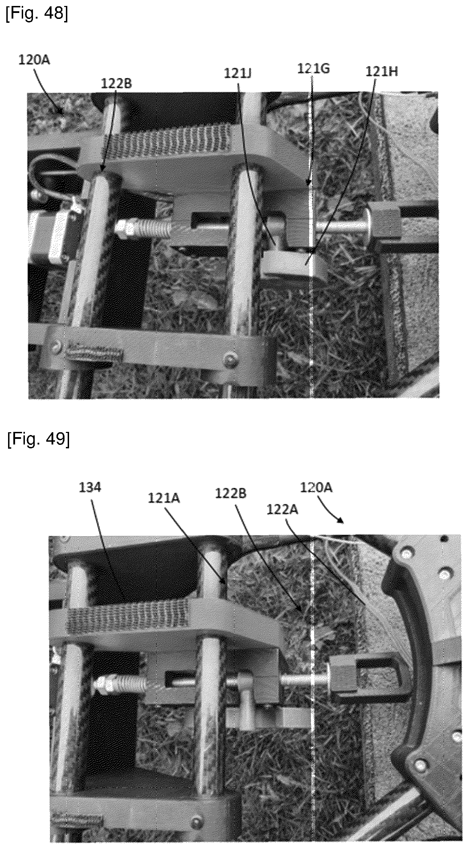

[Fig.43], [Fig.44], [Fig.45], [Fig.46], [Fig.47], [Fig.48] et [Fig.49] sont des vues détaillées de l'outil du dispositif auxiliaire de l'ensemble drone outil représenté dans la figure 34.

La présente demande a pour objet un drone 20, un dispositif auxiliaire 100 pour un tel drone 20 ainsi qu'un ensemble drone-outil 10 comprenant un tel drone 20 et un tel dispositif auxiliaire 100.

Le drone 20 comporte un dispositif de connexion 60 apte à être relié à un moyen de connexion 114 du dispositif auxiliaire 100 lorsque dispositif d'arrimage 50 est fixé au moyen d'arrimage 110.

Selon une possibilité, le dispositif de connexion 60 peut être apte à être automatiquement relié au moyen de connexion 114 du moyen d'arrimage 110 lorsque le dispositif d'arrimage 50 est fixé au moyen d'arrimage 110, c'est-à-dire lorsque le dispositif auxiliaire 100 est fixé au drone 20 pour former un ensemble drone-outil 10. De façon alternative, le dispositif de connexion 60 peut être apte à être manuellement relié au moyen de connexion 114 du moyen d'arrimage 110.

Le dispositif auxiliaire 100 comporte un moyen d'arrimage 110 pourvu d'un crochet d'arrimage 112 apte à être reçu de manière réversible dans le verrou d'arrimage électromagnétique 52 et un outil, de préférence un outil d'élagage 120 ou un outil de dépôt d'un agent antigivre 120A.

Le drone 20 comporte un châssis 30, au moins deux rotors 40 reliés au châssis 30 et un moyen de pilotage 22 relié au châssis 30 et pourvu d'un moyen de commande apte à commander les au moins deux rotors 40. Le drone 20 comporte en outre un dispositif d'arrimage 50 apte à être fixé de manière réversible à un moyen d'arrimage 110 d'un dispositif auxiliaire 100. Le dispositif d'arrimage 50 peut soit être un verrou d'arrimage électromagnétique 52 apte à recevoir un crochet d'arrimage 112 du moyen d'arrimage 110 de manière réversible, soit un crochet d'arrimage apte à être reçu dans un verrou d'arrimage électromagnétique du moyen d'arrimage 110 de manière réversible.

Le drone 20 peut comporter au moins un moteur électrique entrainant les rotors, de préférence un moteur électrique pour chaque rotor entrainant celui-ci. Le drone 20 peut comporter une batterie reliée électriquement aux moteurs par le biais du moyen de pilotage 22 et/ou du moyen de commande afin d'alimenter le ou les moteurs.

Le verrou d'arrimage électromagnétique 52 peut comporter un pêne 54 ainsi qu'un servomoteur 56 apte à déplacer le pêne 54 entre une position ouverte, dans laquelle le crochet d'arrimage 112 est déverrouillé, et une position fermée, dans laquelle le crochet d'arrimage 112 est verrouillé. Le pêne 54 peut se présenter sous la forme d'une tige de diamètre d'environ 8 mm.

Le verrou d'arrimage électromagnétique 52 peut être apte à être fermé de façon automatisée. Quand un contact entre le crochet d'arrimage 112 et le verrou d'arrimage électromagnétique 52 est réalisé, le contact peut être détecté par le verrou d'arrimage électromagnétique 52. Lorsque le contact entre le crochet d'arrimage 112 et le verrou d'arrimage électromagnétique 52 est détecté, le pêne 54 peut être projeté au travers du crochet d'arrimage 112 et se loger dans une gâche 58 du verrou d'arrimage électromagnétique 52. Cette gâche 58 peut également être réalisée sous la forme d'une gâche électromagnétique apte à condamner le pêne 54 lorsqu'il y est introduit.

Le dispositif d'arrimage 50 permet l'arrimage du dispositif auxiliaire 100. Le dispositif d'arrimage 50 autorise, avec le moyen d'arrimage 110 du dispositif auxiliaire 100, un verrouillage/déverrouillage manuel au sol. Les verrouillages peuvent être commandés avec au moins le dispositif auxiliaire 100 au sol, tandis que les déverrouillages peuvent être commandés ou automatiques, au sol comme en vol. Les déverrouillages automatiques peuvent être effectués en réponses à des détections, soit de positionnement du crochet d'arrimage 112 dans le verrou d'arrimage électromagnétique 52, soit d'un risque majeur et/ou d'une urgence.

Selon une possibilité, le drone 20 peut comporter entre 2 et 4 batteries distinctes. Le choix s'effectue en fonction de la charge à emporter. En effet, avec deux batteries le drone pèse 14500 g, il permet ainsi un emport de 10500 g pour permettre de rester en dessous des 25000g. Avec quatre batteries, le drone pèse 20000 g pour permettre un emport de 5000 g.

La ou les batterie(s) peut/peuvent être une batterie à densité d'énergie élevée et une longue durée de vie avec une capacité totale de plus de 300 cycles de charge. L'intervalle de décharge de chaque batterie peut être de l'ordre de 2,8 V à 4,2 V, la tension de 2,8 V étant la tension à laquelle le drone 20 peut déclencher une procédure d'atterrissage en urgence (pour niveau de batterie faible). Le courant de charge maximal de la batterie peut être de 15 A. Le courant de charge recommandé de la batterie peut être de 10 A, ce qui permet une durée de vie de la batterie accrue. La batterie peut être une batterie au lithium-polymère ou une batterie lithium-ion. La batterie peut présenter un poids de 2570 g. La batterie peut présenter une capacité de 30000 mAh.

Le drone 20 peut, lorsqu'il est muni de deux de telles batteries et pourvu d'une charge de 10000 g, présenter une autonomie d'environ 25 minutes, par exemple. Cette autonomie peut varier en fonction de l'environnement météorologique (vent / froid).

De préférence, le drone 20 est pourvu de six moteurs électriques alimentant chacun un rotor. Le drone présente ainsi une configuration de « hexacoptère ». Cette configuration confère un grand appui sur l'air et une grande stabilité au drone 20.

Le moteur peut être un moteur sans balai ayant une poussée maximale d'environ 11.2 kg, tel que par exemple un moteur du fabriquant « T-Motor » connu sous le nom de « U8 XL 110kv ».

Le dispositif auxiliaire pour un drone 20 selon la présente demande comporte un moyen d'arrimage 110 pourvu soit d'un crochet d'arrimage 112 apte à être reçu de manière réversible dans le verrou d'arrimage électromagnétique 52, soit d'un verrou d'arrimage électromagnétique apte à recevoir le crochet d'arrimage du dispositif d'arrimage 50 de manière réversible. Le dispositif auxiliaire 100 comprend en outre un outil, de préférence un outil d'élagage 120 ou un outil de dépôt d'un agent antigivre 120A.

La liaison mécanique entre le drone 20 et le dispositif auxiliaire 100 peut être réalisé à l'aide du dispositif d'arrimage 50 et du moyen d'arrimage 110. Dans un mode de réalisation possible, le dispositif d'arrimage 50 peut être pourvu du verrou d'arrimage électromagnétique 52 et le moyen d'arrimage 110 peut être pourvu du crochet d'arrimage 112 apte à être reçu dans le verrou d'arrimage électromagnétique 52. Inversement, le dispositif d'arrimage 50 peut être pourvu d'un crochet d'arrimage et le moyen d'arrimage 110 peut être pourvu d'un verrou d'arrimage électromagnétique apte à recevoir le crochet d'arrimage.

Le crochet d'arrimage 112 peut se présenter sous la forme d'une manille pourvu d'une pièce présentant essentiellement une forme de U qui est fermée par un axe mobile formé par un boulon par exemple.

Le verrou d'arrimage électromagnétique 52 peut être pourvu d'un interstice 53 apte à loger le crocher d'arrimage 112 au moins en partie.

Dans la position ouverte du pêne 54, le crochet d'arrimage 112 peut être détaché du verrou d'arrimage électromagnétique 52 par exemple sous l'effet de la gravité agissant sur le dispositif auxiliaire 100. Dans la position fermée du pêne 54, le crochet d'arrimage 112 peut être maintenu et/ou bloqué mécaniquement dans le verrou d'arrimage électromagnétique 52.

Le servomoteur 56 peut recevoir une commande d'ouverture ou de fermeture du pêne 54. Par la suite, le pêne 54 vient libérer ou verrouiller le crochet d'arrimage 112 positionné dans l'interstice 53.

Le dispositif auxiliaire 100 pourvu de l'outil de dépôt d'un agent antigivre 120A peut comporter une liaison mécanique amovible automatique ou télécommandée entre l'outil de dépose d'un agent antigivre 120A et un moyen antigivre 122C de l'outil de dépose d'un agent antigivre 120A. Un tel moyen antigivre 122C peut également être appelé masse giratoire.

L'outil de dépôt d'un agent antigivre 120A peut être apte à reposer sur au moins une ligne et apte à être déplacé le long de la ligne. L'outil de dépôt d'un agent antigivre 120A peut être apte à déposer un agent antigivre, de préférence le moyen antigivre 122C. L'outil de dépôt d'un agent antigivre 120A peut comporter un dispositif d'accrochage du moyen antigivre 122C sur la ligne. L'outil de dépôt d'un agent antigivre 120A peut en outre être pourvu d'au moins une gorge 122G permettant le maintien du moyen antigivre 122C pendant les phases de vols et de dépose de l'ensemble drone-outil 10. L'outil de dépôt d'un agent antigivre 120A peut comporter un dispositif de percussion 121F. Le dispositif de percussion 121F peut être sous contrainte élastique actionné par un servomécanisme télécommandé.

Le dispositif auxiliaire 100 peut comprendre un moyen de stockage d'énergie électrique tel qu'une batterie électrique 118 et un moteur électrique 116 alimenté par le moyen de stockage d'énergie électrique et entrainant l'outil, en particulier l'outil d'élagage 120. Le système de commande 102 du dispositif auxiliaire 100 peut être alimenté par la batterie électrique 118.

L'ensemble drone-outil 10 comporte un tel drone 20 et un tel dispositif auxiliaire 100. Le dispositif d'arrimage 50 du drone 20 est fixé au moyen d'arrimage 110 du dispositif auxiliaire 100, le crochet d'arrimage 112 étant reçu de manière réversible dans le verrou d'arrimage électromagnétique 52.

L'ensemble drone-outil 10 et/ou le drone 20 sont configurés pour présenter un équilibre de poids pour l'ensemble drone-outil 10, le drone 20 et/ou le dispositif auxiliaire 100 et pour améliorer la performance de l'ensemble drone-outil 10.

A cet effet, le moteur électrique 116 et la batterie électrique 118 peuvent de préférence être positionnés à proximité de la deuxième extrémité 134 de la perche 130. La batterie électrique 118 peut en outre être agencée entre la deuxième extrémité 134 et le moteur électrique 116 et/ou à proximité du système de commande 102 du dispositif auxiliaire 100, pour avantageusement réduire les câblages blindés du dispositif auxiliaire 100.

L'outil d'élagage 120 peut comporter une coque de protection 121, dans lequel peut être logé le moteur électrique 116 et/ou la batterie électrique 118 et/ou le système de commande 102 du dispositif auxiliaire 100. La coque de protection 121 peut également loger une courroie de transmission de l'outil d'élagage 120 reliant le moteur électrique 116 à la scie 122.

La coque de protection 121 peut présenter une forme permettant une fluidité de déplacement du dispositif auxiliaire 100 dans un environnement feuillu touffu.

Dans le mode de réalisation préféré, le dispositif auxiliaire 100 peut présenter une masse d'environ 10,1 kg, en incluant un chariot 140 d'environ 1,4 kg, une scie 122 d'environ 0,6 kg et de la batterie d'environ 1,35 kg.

Dans le mode de réalisation préféré, le dispositif auxiliaire 100 peut présenter une masse d'environ 9700 g. L'ensemble drone-outil 10 et/ou le drone 20 sont configurés pour présenter une protection contre les décharges électriques, par exemple au moyen d'une isolation électrique. En effet, les lignes HTB et HTA requièrent un minimum de 1 mètre de distance pour éviter les arcs électriques et/ou éviter une induction électromagnétique via les liaisons filaires blindées. Le drone 20 n'étant pas relié à la terre, il n'est pas sujet à une tension lorsque le drone est à proximité du réseau de lignes HTB et HTA. Cependant un environnement humide ou électrostatique peut transmettre une tension vers le drone 20. Pour palier a toutes tensions vers le drone, un matériau isolant (fibre de verre) d'un minimum d'un mètre entre le drone et l'outil permet d'inhiber ce risque. La distance peut donc rester inférieure à 1 m dans le cas ou une partie isolante entre le drone 20 et l'outil du dispositif auxiliaire 100 d'un mètre de long est présente. Ceci permet d'éviter une détérioration du drone 20 en vol s'il y a contact de l'outil avec la ligne et d'éviter une induction électromagnétique issue de la ligne via les liaisons filaires du drone 20 et l'outil du dispositif auxiliaire 100.

Le drone 20 selon la présente demande est capable d'arrimer et de guider un outil de coupe capable de faire un élagage et/ou écimage d'espace arboré avec des branches et non des brindilles jouxtant latéralement ou en dessous des dites lignes HTB, HTA.

Le drone 20 selon la présente demande peut ainsi être rendu multifonctionnel en permettant l'arrimage de dispositifs auxiliaires 100 différents équipés d'un outil différent. Avantageusement, le dispositif d'arrimage 50 permet l'arrimage, la dépose et/ou le largage du dispositif auxiliaire 100. En outre, une modularité des divers outils tels que des accessoires de prise de vue, des accessoires de prélèvements, des outils variés d'échantillonnage, d'élagage horizontal des cimes et crêtes sous lignes et vertical des abords verticaux des végétations jouxtant latéralement les lignes HTB, HTBA etc., est rendue possible.

Le drone 20 selon la présente demande permet d'écrêter, d'écimer et/ou d'élaguer dans des circonstances environnementales à risques de manière sécurisée.

L'ensemble drone-outil 10 et/ou le drone 20 sont en outre configurés pour réduire les risques d'ondes interférentes électromagnétiques sur les composants électroniques du drone 20 et/ou du dispositif auxiliaire 100, tel que le moyen de pilotage 22 et/ou le moyen de commande du drone 20 et/ou le système de commande 102 du dispositif auxiliaire 100, ainsi que des éléments systèmes de commandes d'automatismes de sécurité du drone 20 et/ou du dispositif auxiliaire 100.

L'ensemble drone-outil 10 et/ou le drone 20 sont en outre configurés pour réduire les risques de surcharges d'efforts supérieures aux tolérances dynamiques et statiques induites par l'outil ou les conditions atmosphériques.

Les éléments structurels, notamment le châssis 30, l'architecture et moteurs des rotors 40 du drone 20 sont adaptés pour réaliser un équilibre entre la performance du drone 20 et/ou de l'ensemble drone-outil 10 avec réserve potentielle de sécurité sans altérer la performance de l'outil du dispositif auxiliaire 100.

Le châssis 30 du drone 20 peut être au moins partiellement réalisé en fibres de carbone et/ou en fibres de verre (fibres de carbone pour gain de poids et rigidité ; fibres de verre comme matériaux non conducteurs).

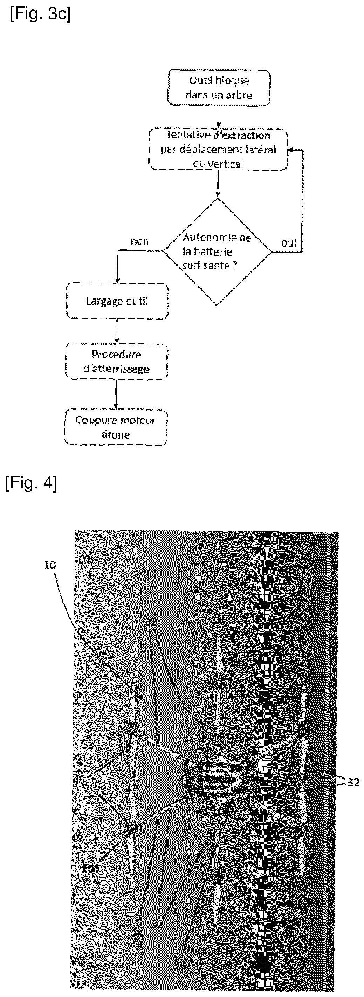

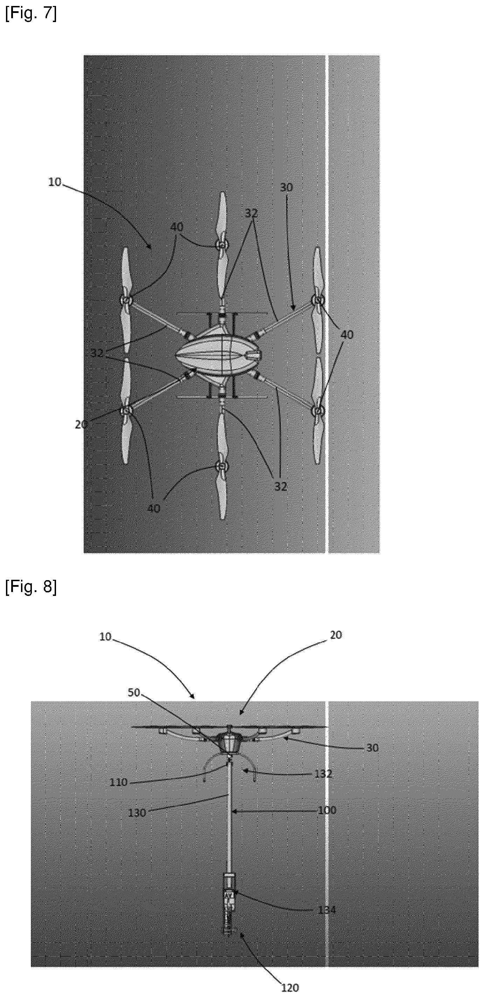

Le châssis 30 peut comporter une pluralité de bras 32, sur chacun desquels peut être monté un rotor 40. Le châssis 30 peut comporter six bras 32, sur chacun desquels peut être monté un rotor 40. Les bras 32 peuvent être disposés de façon équiangulaire, tel que représenté dans les figures 4 et 7. Les six bras 32 chacun pourvu d'un rotor 40 permettent d'assurer la maniabilité, manœuvrabilité et stabilité du drone 20 d'une part, d'assurer les performances dynamiques des outils du dispositif auxiliaire 100 et de ne pas dépasser les 25 kg de la masse de l'ensemble drone-outil 10 d'autre part.

Selon une réalisation alternative du drone 20, le drone 20 est pourvu d'un châssis 30 monocoque ovoïde compact ou circulaire de section sensiblement ovale ou similaire. Le drone 20 peut être pourvu d'au moins six rotors 40, de préférence au moins six rotors 40 avec pare-chocs, rotors 40 logés solidaires dans des ouvertures verticales du châssis 30. Avantageusement, grâce à cette configuration du châssis 30, le drone 20 peut présenter moins d'emprises aux perturbations et interférences physiques avec des obstacles végétaux ou structurels.

Tous les systèmes électriques et ou électroniques du drone 20 et du dispositif auxiliaire 100 peuvent pour le moins être redondants aux fins d'assurer des protocoles de sécurités programmés tels qu'un largage d'urgence du dispositif auxiliaire 100.

Le drone 20 peut être optimisé pour un élagage latéral aux lignes de transport d'énergie ou de communications.

Le problème posé est l'écimage ou écrêtage donc un élagage horizontal des végétations, taillis et arbustes sous lignes pour lesquels les travaux, la conception du drone 20 et des dispositifs auxiliaires 100 requièrent des caractéristiques différentes de celles déjà connues de l'état de l'art pour les dispositifs auxiliaires 100 présentant un outil de coupe.

Afin de rester dans la réglementation d'utilisation des drones en Europe, le poids du drone 20 avec sa batterie et l'outil est de préférence en dessous ou égal à 25 kg.

Le drone 20 peut présenter une envergure d'environ 235 cm, une hauteur d'environ 70 cm, un poids d'environ 9,2 kg (sans sa batterie). La capacité d'emport du drone 20 peut être d'environ 12 kg.

En termes généraux, un aéronef, tel que le drone 20, en vol est libre de tourner dans trois dimensions : tangage, le nez vers le haut ou vers le bas sur un axe reliant les ailes ; lacet, le nez à gauche ou à droite autour d'un axe allant haut en bas ; et roulis, rotation autour d'un axe allant du nez à la queue. Le lacet peut également être nommé « yaw », le tangage nommé « pitch » et le roulis nommé « roll ». Les axes sont alternativement désignés comme latéral, vertical et longitudinal. Ces axes se déplacent avec le véhicule et pivotent par rapport à la terre en même temps que l'aéronef.

Le tangage, le roulis et en particulier le lacet peuvent avoir les répercussions sur la liaison entre le dispositif d'arrimage 50 et le moyen d'arrimage 110. Les embardées en roulis et/ou en tangage peuvent entraver la liaison entre le crochet d'arrimage 112 et le pêne 54. En particulier, le lacet peut être brusque et avoir une amplitude conséquente de sorte que, dans le cas ou des joues du crochet d'arrimage 112 jouxtent étroitement des parois formant l'interstice 53, la force induite par le lacet sera contrée par l'inertie du dispositif auxiliaire 100. Pour exemple : si les rotors 40, de préférence les six rotors 40, assurent en somme une poussée de 70 kg (700 N) pour gérer un poids total de 25 kg (250 N) pour l'ensemble drone-outil 10, dont 15 kg pour le drone 20 et 10 kg (100 N) pour le dispositif auxiliaire 100 et additionnellement environs 20 kg (200 N) de poussée outil en service, les 35 kg (350 N) de puissance résiduelle ne seront pas en mesure d'éviter un largage d'urgence du dispositif auxiliaire 100. C'est la raison pour laquelle une largeur substantielle entre les parois formant l'interstice 53 est préférable, notamment une largeur allant au-delà de la largeur du crochet d'arrimage 112 laissant un jeu. Ce jeu ainsi obtenu permettra d'absorber les forces d'un lacet et plus précisément permettra aussi de limiter le lacet induit par les forces d'attaque ou de charge du dispositif auxiliaire 100 en service.

Le drone 20 peut être pourvu d'une première télécommande 200 apte à établir un lien de communication avec le moyen de pilotage 22 du drone 20 pour permettre le pilotage de celui-ci.

Le dispositif auxiliaire 100 peut être pourvu d'une deuxième télécommande 300 apte à établir un lien de communication avec un système de commande 102 du dispositif auxiliaire 100 pour permettre le pilotage du dispositif auxiliaire 100, notamment l'outil 120, 120A du dispositif auxiliaire 100.

Le moyen de pilotage 22 du drone 20 peut comporter au moins un récepteur GPS permettant au drone 20 et/ou à l'ensemble drone-outil 10 de déterminer sa position géographique, afin de par exemple pouvoir le maintenir dans sa position en cas de rupture d'une liaison radio reliant la première télécommande 200 du drone 20 au moyen de pilotage 22 du drone 20. Le récepteur GPS est apte à gérer le positionnement de l'ensemble drone-outil 10 par rapport aux repères fixes lignes/pylônes pour le respect de la distanciation de 1 m du drone 20 et des lignes. Le récepteur GPS participe au contrôle et à la sécurité de l'ensemble drone-outil 10.

Le moyen de pilotage 22 peut comporter au moins un accéléromètre, au moins un gyroscope, au moins un magnétomètre et/ou au moins un baromètre. En particulier, le moyen de pilotage 22 peut comporter trois accéléromètres, trois gyroscopes, trois magnétomètres et/ou deux baromètres pour disposer d'une redondance. Cette redondance permet de palier aux interférences électromagnétiques ou tout défaut électrique du drone 20.

Pour permettre un positionnement précis du drone 20, le moyen de pilotage 22 peut être pourvu de deux récepteurs GPS. Ceux-ci peuvent être positionnés séparés l'un de l'autre. Si l'un parmi les récepteurs GPS venait à ne plus transmettre de position, l'autre parmi les récepteurs GPS prendra automatiquement le relai.

Le drone 20 et/ou le dispositif auxiliaire 100 peuvent chacun comporter un dispositif de mesure de distance à un objet. Le dispositif de mesure de distance à un objet peut être un moyen LIDAR par exemple. L'objet peut être tout potentiel obstacle pour l'ensemble drone-outil 10, tel que la ligne électrique ou la végétation entourant cette ligne électrique. Le dispositif de mesure de distance à un objet équipant le drone 20 permet de détecter une distance entre le drone 20 et l'objet qui est inférieure à une distance de sécurité. Le dispositif de mesure de distance à un objet équipant le dispositif auxiliaire 100 permet de détecter une distance entre le dispositif auxiliaire 100 et l'objet qui est inférieure à une distance de sécurité.

Le dispositif de mesure de distance à un objet équipant le drone 20 et/ou le dispositif de mesure de distance à un objet équipant le dispositif auxiliaire 100 peuvent chacun être adapté pour communiquer une information reflétant la distance entre le drone 20 et/ou le dispositif auxiliaire 100 et l'objet au moyen de pilotage 22. Le moyen de pilotage 22 peut ensuite piloter le drone 20 et/ou l'ensemble drone-outil 10 de façon automatisée de sorte à ce que la distance entre le drone 20 et/ou le dispositif auxiliaire 100 soit augmentée jusqu'à ce qu'elle soit supérieure à la distance de sécurité.

La première télécommande 200 peut être apte à établir un lien de communication avec le moyen de pilotage 22 sur une première gamme de fréquence et la deuxième télécommande 300 peut être apte à établir un lien de communication avec système de commande 102 sur une deuxième gamme de fréquence, de préférence différente et/ou disjointe/dissociée de la première gamme de fréquence. La première gamme de fréquence peut comporter 2.4Ghz et la deuxième gamme de fréquence peut comporter 817Mhz par exemple. Ainsi, la première télécommande 200 permet d'effectuer des actions d'urgences du drone 20 de manière prioritaire et autonome. La première télécommande 200 et la deuxième télécommande 300 peuvent être maniées par un opérateur distinct.

La première télécommande 200 permet le contrôle et le positionnement du drone par un télépilote. La première télécommande 200 peut être pourvue :
- d'un écran d'affichage 202 ;
- d'au moins une manette 204 de pilotage du drone 20 ;
- un bouton de largage d'urgence 206 du dispositif auxiliaire 100 ;
- un bouton d'arrêt d'urgence 208 de l'outil 120, 120A du dispositif auxiliaire 100 ; et/ou
un bouton d'arrêt d'urgence du drone 20.

La première télécommande 200 peut être une radiocommande télépilote de type « Aeronav UXV ».

La deuxième télécommande 300 peut présenter un bouton 318 de mise sous tension de la télécommande 300, un bouton de largage d'urgence 302 du dispositif auxiliaire 100 et/ou un bouton d'arrêt d'urgence 304 de l'outil 120, 120A du dispositif auxiliaire 100. Le bouton d'arrêt d'urgence 304 peut par exemple permettre l'arrêt d'urgence de la scie 122. La deuxième télécommande 300 peut en outre présenter un indicateur de puissance de transmission 306 du signal radio et/ou un indicateur de niveau 308 de la batterie 118 et/ou un connecteur de charge 310 et/ou un interrupteur principal 312. Le bouton de largage d'urgence 302 peut être pourvu d'un capot de protection 303. Selon une possibilité, la deuxième télécommande 300 peut en outre comporter un bouton d'arrêt d'urgence du drone 20. Ce bouton d'arrêt d'urgence du drone 20 présent sur la deuxième télécommande 300 peut être redondant avec le bouton d'arrêt d'urgence du drone 20 présent sur la première télécommande 200 et/ou servir à la même fonction que le bouton d'arrêt d'urgence du drone 20 présent sur la première télécommande 200.

La deuxième télécommande 300 peut, selon une possibilité, être également pourvue d'un écran d'affichage et/ou d'un bouton d'arrêt d'urgence du drone 20.

Les boutons de largage d'urgence 304 du dispositif auxiliaire 100 et/ou bouton d'arrêt d'urgence 304 de l'outil 120, 120A du dispositif auxiliaire 100 présent sur chacune des télécommandes 200, 300 peuvent être pourvus d'un indicateur visuel d'état du bouton respectif.

Le dispositif auxiliaire 100 peut en outre comporter une perche 130, le moyen d'arrimage étant agencé sur une première extrémité 132 de la perche 130. L'outil peut être agencé sur une deuxième extrémité 134 de la perche 130, opposée à la première extrémité 132.

La perche 130 peut être une perche télescopique. C'est-à-dire que la perche 130 peut comprendre plusieurs éléments longitudinaux pouvant s'emboîter et coulisser les uns dans les autres pour faire varier la longueur de la perche 130.

La perche 130 peut être pourvue d'un moyen permettant de faire varier la longueur de la perche 130. La longueur de la perche 130 peut être variée en déplaçant les éléments longitudinaux l'un par rapport à l'autre. Ces éléments longitudinaux peuvent être déplacés l'un par rapport à l'autre à l'aide d'un système pneumatique et/ou motorisé.

La perche 130 peut donc être pourvue d'un tel système pneumatique et/ou motorisé pour ajuster la longueur de la perche 130.

Un tel système pneumatique peut comprendre un réservoir de gaz comprimé. Ce gaz comprimé peut être de l'air comprimé. Le système pneumatique peut en outre comprendre un actionneur pneumatique permettant l'extension et / ou la réduction de la longueur utile de service de la perche 130. Le montant de l'extension et / ou de la réduction peut être choisit par le volume de gaz libéré du réservoir. L'actionneur pneumatique peut être un piston par exemple. L'extension peut aussi mettre à profit la gravité exercée sur la masse de l'outil du dispositif auxiliaire 100, auquel cas le système pneumatique contribue essentiellement à réduire la longueur de la perche 130.

Un tel système motorisé peut comporter un moteur avec filin et ressort de compression/étirement. Un tel système motorisé peut également être envisagé pour de tels ajustements de longueur de perche 130.

La perche 130 peut par exemple présenter, dans un état déployé, une longueur maximum d'environ 1000 cm et, dans un état replié, une longueur minimale d'environ 230 cm.

Selon une possibilité, au moins deux parmi les éléments longitudinaux pouvant s'emboîter de la perche 130 peuvent chacun comprendre au moins un perçage, de préférence plusieurs de ces perçages, la perche 130 présentant en outre au moins une goupille introduite dans deux perçages de deux éléments longitudinaux distincts, mis en superposition. Ainsi les éléments longitudinaux peuvent être bloqués et verrouillés contre un déplacement longitudinal relatif de ceux-ci.

Les caractéristiques précitées permettent de garder le drone 20 à une distance de sécurité d'arc électrique d'au moins un mètre de la ligne HTB le cas échéant mais aussi de permettre une hauteur d'élagage accrue voire multipliée sans nécessiter pour le pilote de monter ou descendre le drone 20 ou obliger de faire plusieurs passes. Cette solution est aussi avantageuse dans l'ébranchage de tronc.

Selon une possibilité, la perche 130 peut au moins partiellement être fabriquée en un matériau composite et/ou isolant, de préférence en fibre de verre et/ou en fibre de carbone. Selon une variante préférentielle de l'invention, la perche 130 peut présenter un premier tronçon 136 en fibre de verre et un deuxième tronçon 138 en fibre de carbone, le premier tronçon présentant de préférence une longueur supérieure ou égale à 1 m.

Comme cité précédemment, la perche 130 en fibre de verre et/ou le premier tronçon 136 en fibre de verre a/ont pour action d'isoler l'outil du drone 20. La perche 130 en fibre de verre et/ou le premier tronçon 136 en fibre de verre est/sont également télescopique(s) et permet/permettent donc de déterminer avant le décollage du drone 20 ou pendant le vol du drone 20 la longueur de perche 130 nécessaire pour la mission. La perche 130 en fibre de verre et/ou le premier tronçon 136 en fibre de verre permet/permettent également d'y loger un câble blindé au travers duquel peut être établi un lien de communication entre le moyen de commande du drone 20 et le système de commande 102 du dispositif auxiliaire 100.

Le deuxième tronçon 138 en fibre de carbone constitue un élément de la perche 130. Le deuxième tronçon 138 assure la liaison entre l'outil et le premier tronçon 136 en fibre de verre de la perche 130. La fibre de carbone a été choisie comme matériau pour le deuxième tronçon 138 car elle apporte résistance et légèreté. La jonction entre le premier tronçon 136 et l'outil peut avantageusement être résistante car contrainte à beaucoup de force lors du travail de coupe de l'outil.

Le premier tronçon 136 en fibre de verre et/ou le deuxième tronçon 138 en fibre de carbone peut/peuvent, chacun pour soi, être télescopiques.

Préférentiellement, pour mettre à profit les performances mécaniques et / ou diélectriques de ces deux matériaux, le deuxième tronçon 138 en fibre de carbone peut porter l'outil tandis que premier tronçon 136 en fibre de verre peut porter le moyen d'arrimage 110, le premier tronçon 136 étant le plus susceptible d'être soumis à des interférences électriques aux abords de lignes de transport d'énergie.

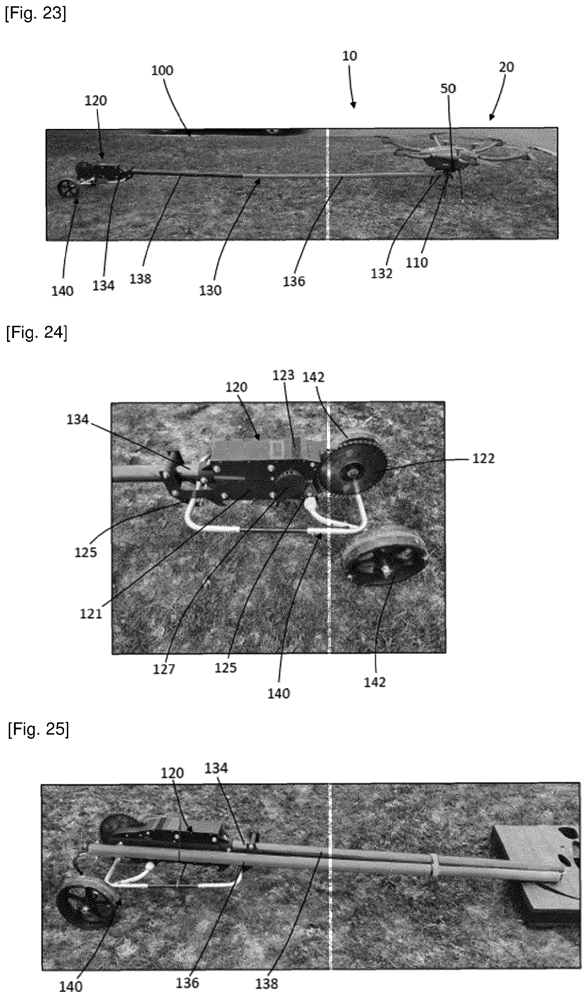

Le premier tronçon 136 et le deuxième tronçon 138 tel que décrit ci-dessus peuvent être emmanchés l'un dans l'autre. En outre, le premier tronçon 136 et le deuxième tronçon 138 peuvent être désolidarisés les uns des autres et repliés sur eux-mêmes pour faciliter le transport du dispositif auxiliaire 100 sur chariot 140 par exemple. Une telle position repliée du dispositif auxiliaire 100 est par exemple divulgué dans la figure 25. Dans un autre mode de réalisation, les éléments longitudinaux de la perche 130 et/ou le premier tronçon 136 et le deuxième tronçon 138 peuvent s'emmancher complètement pour faciliter le transport du dispositif auxiliaire 100 sur chariot 140.

La perche 130 peut comprendre un limitateur d'extension télescopique empêchant un déploiement de la perche 130 télescopique au-delà de la longueur maximale. Un tel limitateur d'extension télescopique peut consister en une corde ou un câble reliant les deux éléments longitudinaux d'extrémité de la perche 130 et agencée à l'intérieur d'une cavité formée dans les éléments longitudinaux de la perche 130.

L'outil, en particulier l'outil d'élagage 120 peut être rendu opérationnel en gardant son attelage vertical pour un élagage ou un ébranchage. Selon une possibilité, le dispositif auxiliaire 100 peut comprendre un système de sustentation de l'outil en position horizontale (non représenté dans les figures) comprenant, le cas échéant, un dispositif de bascule basculant l'outil à l'horizontale. De façon alternative ou additionnelle, le dispositif auxiliaire 100 peut être pourvu de bras additionnels connectant la perche 130 sensiblement en parallèle au plan dans lequel sont agencés les rotors 40 pour former un triangle pyramide ou trapèze ou similaire de sustentation de l'outil pour un écimage ou écrêtage de la végétation sous ligne. Le système de sustentation de l'outil en position horizontale et/ou le dispositif de bascule peut/peuvent être télécommandable(s).

De façon alternative, l'outil d'élagage 120 peut être solidarisé à la perche 130.

Le système de sustentation de l'outil en position horizontale peut comprendre deux élingues joignant les extrémités de la perche 130 au crochet d'arrimage 112, formant ainsi un triangle de suspension.

Selon un autre mode de réalisation du système de sustentation, celui-ci comprend quatre élingues dont les extrémités sont solidaires du crochet d'arrimage 112 alors qu'une traverse est rendue solidaire de deux extrémités libres des élingues, et préférentiellement de même pour les deux extrémités des élingues restantes. Les traverses peuvent être solidaires une à une des extrémités de la perche 130 équipée à ses extrémités de deux outils ou outil et contrepoids. La suspension est de forme pyramidale.

Un autre mode est une suspension pyramidale tronquée dans laquelle le crochet d'arrimage 112 est solidaire d'une platine rectangulaire.

Dans son application verticale d'élagage la perche 130 télescopique permet d'augmenter la hauteur de l'amplitude de la taille. Dans son application horizontale d'écrêtage ou d'écimage la perche télescopique permet d'augmenter la largeur de l'amplitude d'écrêtage.

Le système de sustentation de l'outil en position horizontale peut lui également être rendu modulable en hauteur pour les mêmes soucis de sécurité et de besoin de passages de coupe.

Le dispositif auxiliaire 100 peut comprendre une ou plusieurs scies 122, de préférence circulaires. La ou les scies 122 peut/peuvent être monté(s) libres en rotation autour d'un axe de rotation, qui est de préférence sensiblement orthogonal à une direction, le long de laquelle s'étend essentiellement la perche 130.

Dans un mode de réalisation alternatif, la ou les scies 122 peut/peuvent être montée(s) libres en rotation autour d'un axe de rotation, qui est de préférence sensiblement perpendiculaire à la direction, le long de laquelle s'étend essentiellement la perche 130.

La scie 122 peut être pourvue d'un capot de protection automatiquement rétractable au contact de branches ou de feuillages.

Le moteur électrique 116 peut entraîner comme dans ce mode de réalisation une lame unique de scie circulaire 122 et/ou un système d'accueil et de guidage 124 des branches et feuillus du dispositif auxiliaire 100. Le moteur électrique 116 entraîne une courroie qui donne une rotation à un axe sur lequel est fixé la scie circulaire 122. La vitesse de rotation du moteur électrique 116 peut être de l'ordre de 5500 tr/min, par exemple. De façon additionnelle ou alternative, le système d'accueil et de guidage 124 peut être apte à la préhension préalable de branches ou branchage. De façon alternative ou additionnelle, le système d'accueil et de guidage 124 fixe peut permettre d'orienter la végétation vers la scie circulaire 122, en particulier vers les dents de la scie circulaire 122. Son inclinaison peut être réglable pour répondre aux différents types de végétations. Le système d'accueil et de guidage 124 est amovible et sa forme peut être changée en fonction des besoins.

En outre, le dispositif auxiliaire 100 peut être pourvu d'un préhenseur 126 et d'un vérin pneumatique 128 actionnant le préhenseur 126, de sorte que ce dernier achemine les branches et branchages vers la scie 122. Le vérin pneumatique 128 reçoit un gaz sous pression par l'intermédiaire d'une bonbonne d'air. La bonbonne d'air peut être déclenchée par un système électronique relié aux commandes du télépilote. Le préhenseur 126 peut être pourvu d'un crochet de préhension 129, de préférence agencé sur son extrémité.

Les lisières de forêt ou de couloirs de lignes, peuvent avec les années être constituées de taillis hauts et drus. Il en est de même pour les tapis végétalisés de ces couloirs dont l'écimage de taillis feuillus est tout autant requis. Le préhenseur 126 permet un élagage/écimage dans un tel contexte. Autrement, le diamètre de la scie 122, la vitesse de rotation de la scie 122 et la conformation des dents de scie de la scie 122 permettent de surseoir à la combinaison technique de préhenseur 126 et scie 122 de petit diamètre.

Le dispositif auxiliaire 100 peut disposer d'un alignement de lames de scies 122 circulaires à motorisation autonome ou unique. Un tel alignement peut prévoir une scie 122 à chacune des extrémités libres de l'alignement.

Un autre mode de réalisation consiste à remplacer le système d'accueil et de guidage 124 par un système à sécateur où les mâchoires feront office de l'ensemble des fonctions substituées.

Les dispositifs auxiliaires 100 peuvent disposer de leur alimentation autonome, d'une motorisation autonome en énergie et/ou d'une électronique embarquée commandée à distance par un opérateur distinct de celui du drone 20.

L'ensemble drone-outil 10 permet une souplesse opérationnelle par un pilote qui positionne et maintien stable le drone 20 et/ou déplace ce dernier tandis qu'un opérateur exécute et contrôle les opérations de coupe effectuées à l'aide du dispositif auxiliaire 100. Un télépilote différent du pilote pilotant le drone 20 actionne la scie 122. Un observateur contrôle la coupe et actionne des actions sécuritaires si besoin. Les moyens permettant de varier la longueur de la perche 130 du dispositif auxiliaire 100 et la distance séparant la perche 130 allient sécurité et rendement des opérations d'élagage, d'écimage et d'ébranchage lorsque les circonstances de risque sont majeures.

Dans le contexte de lignes HTB et HTA, on peut, selon la règlementation française, distinguer au moins trois catégories de situations U₀, U₁ et U₂. Dans la situation dite U₂, la végétation est à une distance minimale de 200 cm de la ligne. Dans la situation U₂, la coupe de la végétation peut se faire depuis le sol sous condition que la coupe se fasse à une distance minimale de 300 cm de la ligne. Dans la situation dite U₁, la végétation est à une distance entre 60 cm et 200 cm de la ligne. Dans la situation U₁, une coupe de la végétation peut se faire depuis le sol sous condition que la coupe soit effectuée à l'aide d'un engin terrestre à bras isolé. Dans la situation dite U₀, la végétation est à une distance entre 0 et 60 cm de la ligne. Dans la situation U₀, une coupe de la végétation ne peut pas se faire depuis le sol, tant que la ligne est sous tension. Dans la situation U₀, tant que la ligne est sous tension, la coupe de la végétation ne peut pas se faire à l'aide d'un engin terrestre ou par quelconque autre moyen relié à la terre. La coupe de la végétation requière ainsi un minimum de distance pour éviter les arcs électriques en fonction de la situation.

Dans une situation U₀, une végétation située à moins de 60 cm d'un réseau sous tension oblige d'effectuer une coupure de ce même réseau pour permettre de l'élaguer depuis le sol. L'utilisation du drone 20 permet d'effectuer cette action de taille depuis les airs, sans contact avec le sol, et sans effectuer une coupure de l'alimentation des conducteurs.

Le dispositif auxiliaire 100 pourvu d'une scie 122 tel que décrit ci-dessus a été développé pour effectuer une coupe latérale par rapport aux conducteurs.

Selon une variante de l'invention, l'outil peut être un outil de dépôt d'un agent antigivre 120A. L'outil de dépôt d'un agent antigivre 120A peut être apte à reposer sur au moins une ligne, tel qu'une ligne électrique, et apte à être déplacé le long de la ligne.

De façon connue, de tels outils de dépôt d'un agent antigivre 120A sont posée manuellement sur les lignes. Le drone 20 selon la présente demande permet de déposer un dispositif auxiliaire 100 pourvu d'un tel outil de dépôt d'un agent antigivre 120A de façon simple et peu onéreuse.

Un tel dispositif auxiliaire 100 pourvu d'un tel outil de dépôt d'un agent antigivre 120A peut être apte à se poser sur la ligne de sorte à déposer le moyen antigivre 122C sur la ligne tel qu'une ligne haute tension HTA ou très haute tension HTB, par exemple. A cet effet, le moyen d'arrimage 110 du dispositif auxiliaire 100 est d'abord fixé de manière réversible au dispositif d'arrimage 50 du drone 20, en recevant le crochet d'arrimage 112 dans le verrou d'arrimage électromagnétique 52. Le dispositif auxiliaire 100 est ensuite véhiculé par le drone 20 depuis le sol de sorte à poser l'outil de dépôt d'un agent antigivre 120A sur la ligne. Ensuite, une fois l'outil de dépôt d'un agent antigivre 120A posé sur la ligne, le moyen antigivre 122C peut reposer sur la ligne. Un magasin 121C présent sur l'outil de dépôt d'un agent antigivre 120A peut encadrer le moyen antigivre 122C pour le maintenir, en particulier avant que l'outil de dépôt d'un agent antigivre 120A soit posé sur la ligne.

Le moyen antigivre 122C peut être pourvu d'un élément d'accrochage permettant l'accrochage du moyen antigivre 122C du moyen antigivre sur la ligne. Une fois l'outil de dépôt d'un agent antigivre 120A étant posé sur la ligne et le moyen antigivre 122C reposant sur la ligne, le magasin 121C peut se mettre en position pour accrocher le moyen antigivre 122C par le biais de son élément d'accrochage sur la ligne. Ladite mise en position du magasin 121C peut être effectuée suite à la réception d'une commande de la première télécommande 200 et/ou de la deuxième télécommande 300. Ce n'est qu'à cet instant que le moyen antigivre 122C est dit déposé.

Ainsi :
a) le drone 20 amène le dispositif auxiliaire 100 portant l'outil de dépôt d'un agent antigivre 120A au contact de la ligne ;
b) lorsque le dispositif auxiliaire 100 portant l'outil de dépôt d'un agent antigivre 120A est posé sur la ligne, l'outil de dépôt d'un agent antigivre 120A est également posé sur la ligne ;
c) le cas échéant, le drone 20 déplace le dispositif auxiliaire 100 pour amener l'outil de dépôt d'un agent antigivre 120A à l'endroit de la ligne destiné à la dépose du moyen antigivre 122C ;
d) Une fois l'endroit exact atteint, l'opérateur déclenche la désolidarisation et la libération du moyen antigivre 122C du magasin 121C par le biais d'une parmi les télécommandes 200, 300 ;
e) le dispositif de percussion 121F peut être déclenché pour libérer le moyen antigivre 122C du magasin 121C et accrocher le moyen antigivre 122C sur la ligne ;
f) ensuite, l'ensemble drone-outil 10 peut être éloigné de la ligne.

Pour des raisons de liberté de mouvement de l'outil de dépôt d'un agent antigivre 120A, la fixation de la perche 130 à l'outil de dépôt d'un agent antigivre 120A et du dispositif auxiliaire 100 au dispositif d'arrimage 50 par le biais du moyen d'arrimage 110 se fait manuellement. La perche 130 du dispositif auxiliaire 100 comportant l'outil de dépôt d'un agent antigivre 120A peut correspondre à la perche 130 du dispositif auxiliaire 100 comportant l'outil d'élagage 120.

Dans un mode de réalisation préférentiel, l'outil de dépôt d'un agent antigivre 120A comporte une structure tubulaire 122A. L'outil de dépôt d'un agent antigivre 120A peut en outre comporter un boîtier principal 121A, un boîtier secondaire 121B, des platines latérales, un magasin 121C, des éléments d'accrochage/décrochage et/ou de verrouillage de l'outil de dépôt d'un agent antigivre 120A à la ligne et/ou une plateforme de transport tel qu'un chariot 140, un ski ou un caddy.

Pour la fixation de la perche 130 à l'outil de dépôt d'un agent antigivre 120A, une partie d'un élément de jonction mâle de l'outil de dépôt d'un agent antigivre 120A est emmanchée et sécurisée dans la deuxième extrémité 134 de la perche 130. La sécurisation de l'outil de dépôt d'un agent antigivre 120A est de préférence réalisé par des écrous traversant les tronçon 136, 138, jusqu'à l'élément de jonction. L'élément de jonction prolonge ces tronçons 136, 138 de la perche 130 avec une platine oblongue traversée dans son épaisseur par une lumière circulaire aux fins de laisser passer un moyen de solidarisation à la partie femelle du moyen d'arrimage 110 du dispositif auxiliaire 100 (et autant à l'opposé à la partie femelle du dispositif d'arrimage 50 du drone 20).

La structure tubulaire 122A peut se présenter en losange s'étendant dans un plan horizontal. La structure tubulaire 122A peut en outre comporter :
- deux cotés longs ou bras formant le sommet de la structure tubulaire 122A et deux bras courts pour former le losange, de grande diagonale dans le sens de la perche 130 et réciproquement de petite diagonale dans le sens perpendiculaire à la grande diagonale,
- sur les extrémités des bras, extrémités de la petite diagonale du losange, peuvent être agencés des dispositifs d'approche, de guidage et de positionnement de l'outil de dépôt d'un agent antigivre 120A sur au moins une ligne,
- au sommet de la grande diagonale le boitier principal 121A destiné à être relié à la perche 130,
- deux traverses parallèles reliant les deux bras les plus longs supportant au droit de la partie inférieure du boitier principal 121A et centré sur celui-ci, d'une part le boitier secondaire 121B pour des éléments de commandes électromécaniques/pneumatiques,
- et d'autre part, avec sur ces traverses et de part et d'autre dudit boitier secondaire 121B des platines parallèles supportant et permettant la mobilité d'un magasin 121C et/ou des éléments d'accrochage/décrochage, de verrouillage du moyen antigivre 122C, dans le sens de la grande diagonale et dans le sens transversal du plan de la structure tubulaire 122A; ledit boitier secondaire 121B pouvant comporter des tiges guides des déplacements du magasin 121C lesquelles constituent des moyens d'accouplement avec un chariot 140 ou caddy, et les côtés courts qui stabilisent la structure en losange sont solidarisées sur les flancs externes de la dite platine.
- le chariot 140 ou le caddy peuvent, dans ce mode de réalisation préférentiel, être accouplé manuellement.

Le dispositif auxiliaire 100 peut comporter un cadre 122B relié à la structure tubulaire 122A. Le cadre 122B peut être réalisé de préférence en un matériau composite isolant. Le cadre 122B peut présenter la forme d'une pyramide dont le sommet comporte des réservations cylindriques adaptées pour recevoir, abouter et fixer solidement les extrémités des cotés longs et bras courts de la structure tubulaire 122A ; lesquelles présentent entre elles un angle permettant d'obtenir un plan de section triangulaire inférieure de la structure tubulaire 122A légèrement incliné vers le plan de la section triangulaire supérieur de la structure tubulaire 122A.

Les grandes faces opposées de ce cadre 122B sont dotées d'ailes arrondies 122F centrées sur le sommet et repliées en aronde (evasée) vers l'extérieur pour réaliser une gorge (de poulie) permettant l'approche de ligne et son guidage vers le fond de cette gorge. Le fond de la gorge de l'aile 122F permet de recevoir un tronçon de la ligne.

Ainsi conçus, le boitier principal 121A et le boitier secondaire 121B positionnés de part et d'autre de la petite diagonale de la structure tubulaire 122A permet de positionner la structure tubulaire 122A partant l'outil 120A et, comme précédemment décrit, les rampes puis des gorges 122G du dispositif d'accrochage de l'outil de dépôt d'un agent antigivre 120A sur la ligne.

Le boitier principal 121A peut être positionné et centré sur lesdites traverses et fixé fermement sur ces dernières.

Dans un mode préférentiel de réalisation, le boitier principal 121A est réalisé en un matériaux composite isolant et est conformé telle une flèche formant un coffre avec un fond creux compartimenté pour recevoir les divers équipements et éléments de solidarisation avec la perche 130, c'est-à-dire d'emmanchement et sécurisation à la perche 130, et les deux bras supérieurs de la structure tubulaire 122A et un couvercle pourvu de moyens d'étanchéité.

L'extrémité de la flèche du boitier principal 121A peut comporter des réservations femelles pour recevoir la platine oblongue d'accrochage de la perche 130 à l'outil de dépôt d'un agent antigivre 120A avec un emboitement guidé et conformé pour assurer un positionnement alignant les lumières circulaires de passage d'une manille de fixation 121G de la platine et des parois de la réservation femelle. Les réservations femelles peuvent présenter un fond semi circulaire pour autoriser une oscillation de la platine entre ses flancs autour de l'axe que forme la manille de fixation 121G, partant pour permettre à l'outil d'osciller.

Le boitier principal 121A peut en outre comprendre un premier compartiment jouxtant l'extrémité de flèche. Le premier compartiment peut loger les éléments de commande, tel que le système de commande 102 du dispositif auxiliaire 100, et d'alimentation, tel que la batterie électrique 118, ainsi que les dispositifs de communications et connexions. Les parois latérales peuvent s'élargir et épouser les extrémités des bras longs de la structure tubulaire 122A qui y aboutent et s'y fixer solidairement par des moyens classiques et/ou par encliquetage auto verrouillant.

Le boitier principal 121A peut comporter un deuxième compartiment, de préférence dans l'alignement du premier compartiment et sur l'axe médian de la conformité en flèche. Le deuxième compartiment peut être équipé d'un dispositif de percussion 121F. Le dispositif de percussion 121F peut être sous contrainte élastique actionné par un servomécanisme télécommandé 121G. Une partie du dispositif de percussion 121F constitue le noyau d'un électroaimant qu'il traverse. L'outil de dépôt d'un agent antigivre 120A peut comporter un chien télécommandé venant sécuriser une position armée en bloquant le dispositif de percussion 121F sur son extrémité via une solution avec cran d'arrêt/ butée du chien; le tout formant gâchette du dispositif de percussion 121F.

Le servomécanisme télécommandé 121G peut être pourvu d'une came excentrique 121H actionnant une tige de transmission 121J transmettant un mouvement au chien.

Un autre mode de réalisation permet de sécuriser manuellement cet armement seul ou en complément avec un moyen mécanique consistant en une clavette crochet solidaire du boitier principal 121A s'emboitant sur un téton solidaire de la queue du dispositif de percussion 121F.

Dans un mode de réalisation de l'invention, la came excentrique 121H et la tige de transmission 121J du servomécanisme télécommandé 121G sont adaptés pour réarmer le dispositif de percussion 121F et le remettre sous contrainte élastique suite à son actionnement.

La détente du chien peut se faire par commande de l'opérateur/pilote, libérant ainsi le dispositif de percussion 121F par action commandée sur le servomoteur qui actionne le chien partant et lève le blocage ; simultanément libère la contrainte du ressort et projette le dispositif de percussion 121F vers sa cible, lequel mouvement est accéléré par l'action de l'électroaimant. L'extrémité de percussion percute dans la position déclenchée la cible qui est un dispositif de relâchement de la fixation et tout autant un maintien sécurisé du moyen antigivre 122C logé dans le magasin 121C du dispositif auxiliaire 100.

Les platines latérales de l'outil de dépôt d'un agent antigivre 120A peuvent être positionnées de part et d'autre à équidistance du boitier principal 121A et y sont fermement fixées au boitier principal 121A. Les platines latérales peuvent être réalisées dans un matériau composite isolant.

Les platines latérales peuvent être conformées :
a) pour réaliser un cadre parallélépipédique comportant des entretoises, ou logeant des dispositifs fonctionnels formant entretoises, afin d'assurer une rigidité et conserver un parallélisme sans jeu entre ses faces internes,
b) avec des réservations adaptées dans leur épaisseur, pour loger et aligner le boitier principal 121A partant le dispositif de relâchement du moyen antigivre 122C avec le dispositif de percussion 121F et avec les dits magasin 121C et éléments d'accrochage/décrochage, de verrouillage ainsi que les dits moyens d'accouplement avec un chariot de transport 140 ou caddy,
c) avec des lumières oblongues placées inclinées entre les bords longitudinaux de chacune des platines latérales et orientées dans le sens de l'arrière vers l'avant du parallélépipède pour permettre des basculements ou positionnement opérationnel dudit magasin 121C,
d) des éléments de fixation permettant l'emmanchement en butée et fixation ferme des extrémités des éléments tubulaires des bras courts de la structure tubulaire 122A.

Le positionnement de ce cadre parallélépipédique par rapport au plan triangulaire des deux côtés longs et de la petite diagonale est déporté vers l'avant ; une aile additionnelle est co-conformée sur le côté arrière de chaque platine et à l'opposé des extrémités des tubes des bras courts des éléments de fixation ; partant l'aile additionnelle de chaque platine latérale comporte les dits moyens de solidarisation sur lesdites traverses.

Ainsi conçues la structure losange présente un premier plan triangulaire avec le boitier principal 121A et un second plan triangulaire incliné vers l'avant du premier assurant le positionnement et l'alignement de ce sous ensemble dispositif de relâchement du moyen antigivre 122C avec le dispositif de percussion 121F et avec les dits magasin 121C et éléments d'accrochage/décrochage et/ou de verrouillage à la ligne ainsi que les dits moyens d'accouplement avec un chariot 140 de transport ou caddy.

Le boitier secondaire 121B peut être fabriqué en un matériau composite isolant. Le boitier secondaire 121B peut être fixé mobile en rotation entre les parois internes des platines latérales. L'amplitude de rotation (bascule avant arrière) peut être limitée par la longueur des lumières oblongues des platines latérales soit donc la course de bascule avant arrière du magasin 121C.

Le boitier secondaire 121B peut être conformé avec un corps central flanqué deux ailes latérales avec des tenons faisant office d'axe de rotation autour duquel le boitier secondaire 121B est monté libre en rotation, avec les éléments de solidarisation du boitier secondaire 121B entre les platines latérales.

Le boitier secondaire 121B peut comporter un compartiment logeant un servomoteur et les connexions adaptées souples filaires d'alimentation et de commandes pour la liaison avec leurs correspondants du boitier principal 121A.

Le boitier secondaire 121B peut comporter des moyens de retenue d'une tête 122E du moyen antigivre 122C.

Sur un axe reliant les deux roues du chariot 140 peuvent être alignés deux blocs d'accouplement en matière composite avec les extrémités des tiges guides du boitier secondaire 121B. Chacun des blocs comportent des lumières transversales largeur dans lesquelles s'introduit l'axe du chariot 140.

Le positionnement et la fixation sur l'axe du chariot 140 garantissent un écartement du plan médian des blocs égal à celui des tiges de guidage du boitier secondaire 121B.

Chacun de ces blocs comporte dans ce médian, perpendiculaire au plan des lumières de passage de l'axe du chariot 140, dans son épaisseur deux lumières de diamètre légèrement supérieur à celui des guides du boitier secondaire 121B qui peuvent s'y loger et traverser.

Ainsi conçu, une extrémité des tiges crénelées qui sont engagées manuellement, avant dépose de l'ensemble auxiliaire outil du drone au sol, dans ces lumières du caddy, la solidarisation est effective par interaction sous l'effet du crénelage dans ces lumières du chariot 140.

Les ailes du boitier secondaire 121B peuvent chacune comporter des logements tubulaires pour fixer des tiges /barres cylindriques de guidage orientées vers les extrémités de l'outil de dépôt d'un agent antigivre 120A. Les extrémités terminales de ces barres peuvent être crénelées et arrondies aux fins de s'engager sans jeux dans des lumières cylindriques du magasin 121C, et dans celles du chariot 140. Leur longueur est déterminée par la longueur du magasin 121C.

Le magasin 121C peut être réalisé dans un matériau composite isolant. Le magasin 121C peut être pourvu de deux berceaux identiques 121D de forme parallélépipédique qui se font face et constituent les extrémités haute et basse du magasin 121C.

Dans leur épaisseur, les deux berceaux 121D peuvent comporter en partie supérieure deux évidements cylindriques et peuvent être traversés, en partie inférieure, par deux lumières cylindriques. Les lumières cylindriques peuvent présenter un diamètre ajusté à celui des tiges du boitier secondaire 121B sur lesquelles les deux lumières inférieures de chaque berceau 121D sont solidarisées et coulissantes.

Les berceaux 121D peuvent comporter une face supérieure évidée cylindrique répliquant la forme du corps du moyen antigivre 122C qui s'y dépose. Dans l'évidement du berceau 121D supérieur sont réalisés des retenues de reliefs du corps du moyen antigivre 122C lesquelles ajustent le positionnement et coopèrent avec les retenues du boitier secondaire 121B pour retenir en position verticale lors du vol par gravité le moyen antigivre 122C.

La bascule du magasin 121C, une fois le moyen antigivre 122C accrochée sur la ligne déloge la masse du berceau 121D. Les reliefs du moyen antigivre 122C ripent hors des dites retenues par gravité.

Les extrémités de chacun de ces évidements peuvent comporter lesdits évidements cylindriques; les évidements cylindriques qui se font face sont reliées par des tiges circulaires qui y aboutent et s'y fixent.

La longueur de ces deux tiges est au moins supérieure à la moitié de la longueur du corps du moyen de dégivrage.

Le berceau 121D supérieur est flanqué sur chacun de ses cotés faisant face à la platine d'un téton cylindrique qui est chacun rendu solidaire et mobile dans lesdites lumières oblongues inclinées des platines latérales.

Ainsi conçu le magasin 121C est à même de pouvoir supporter sans jeu le moyen antigivre 122C et de se positionner sur les tiges guides du boitier secondaire 121B d'une part et d'autre part de pouvoir s'écarter de la verticale de la structure en basculant en rotation dans les des lumières oblongues des platines latérales.

Le moyen antigivre 122C, pouvant également être dénommé par les professionnels masse giratoire, se décompose en un corps métallique cylindrique 122D de longueur au moins égale à la longueur du magasin 121C, et une tête 122E pourvue d'un dispositif d'accroche et de positionnement 122H sur une ligne.

Le dispositif d'accroche et de positionnement 122H est un dispositif automatique comportant un plateau fixe avec deux ailes entre lesquelles bascule en rotation un autre plateau.

Les faces inférieures des plateaux opposées l'une à l'autre côté corps de du moyen antigivre 122C peuvent être configurées avec une rampe destinée à accoster la ligne et pour guider par gravité la ligne vers les deux gorges 122G qui jouxtent les rampes et au droit de l'axe de basculement.

La face supérieure du plateau basculant opposée à la face supérieure du plateau fixe comporte un levier à cran d'arrêt lequel est cerné par un ressort puissant en contrainte entre ces faces opposées ; ce levier traverse une lumière du plateau fixe et à l'arrière duquel il s'ancre avec son cran d'arrêt lorsque le plateau mobile est amené en compression du ressort pour être en position armée.

La puissance de déclenchement de cette position armée nécessite une sécurité manuelle réalisée avec une goupille au travers du levier au droit de l'ancrage du levier. La queue du levier constitue le point d'impact du dispositif de percussion 121F.

Ainsi conçu, le dispositif auxiliaire 100 pourvu d'un outil de dépôt d'un agent antigivre 120A sur des lignes HT permet de déposer le moyen antigivre 122C armé dégoupillé dans le magasin 121C et sur ses retenues, puis de positionner sa tête 122E en déplaçant le magasin 121C sur les tiges, par-dessus et au droit du boitier secondaire 121A de sorte que l'extrémité du levier du dispositif d'accrochage de la masse giratoire soit positionné sur des moyens de retenues du boitier secondaire 121B et au droit et aligné sur le dispositif de percussion 121F du boitier principal 121A. Ainsi en position de vol, le boitier principal 121A aligné sur le boitier secondaire 121B lui-même aligné sur le magasin 121C sont tous trois à la verticale par rapport à la direction selon laquelle s'étend la perche 130 ; le moyen antigivre 122C étant retenu par sa masse sur les retenues adaptées. Une fois la pose des dispositifs d'approche et de positionnement de l'outil sur la ligne réalisée, l'alignement de la tête 122E du moyen antigivre 122C est accomplie. La commande de déclenchement du dispositif de percussion 121F par l'opérateur va déclencher l'ancrage du levier d'armement de la tête 122E ; le plateau mobile se clampe sur la ligne de façon ferme et définitive sous l'action précontrainte du ressort. L'opérateur actionne la bascule du panier qui rompt sa verticalité et son alignement sur le boitier secondaire 121B ; partant le moyen antigivre 122C ripe sur les retenues et le drone 20 éloigne l'outil 120A en dégageant les dispositifs d'approche de ligne.

Le dispositif auxiliaire 100 peut être autonome en énergie, c'est-à-dire qu'il est fonctionnel indépendamment d'une source d'énergie extérieure. Le dispositif auxiliaire 100 peut également être autonome en motorisation.

Le dispositif auxiliaire 100 peut être pourvu d'un système de commande 102 pourvu d'une pluralité d'unités de commande redondantes.

Préférentiellement, l'outil de dépôt d'un agent antigivre 120A peut être pourvu d'un moyen de solidarisation et de verrouillage de l'outil de dépôt d'un agent antigivre 120A à la ligne par effet de gravité du dispositif auxiliaire 100.

Le dispositif auxiliaire 100 peut en outre comprendre un chariot 140 sur lequel repose l'outil et/ou la perche 130 en une position horizontale du dispositif auxiliaire 100. Le chariot 140 est un dispositif qui permet de faciliter le décollage de l'ensemble drone-outil 10. Lorsque l'ensemble drone-outil 10 décolle du sol, le drone 20 tire le chariot 140 le long du sol dans une première phase de décollage de l'ensemble drone-outil 10.

Le chariot 140 peut être adapté pour protéger l'outil et/ou pour être posé sur le sol pour soutenir l'outil et/ou la perche en une position horizontale du dispositif auxiliaire. Le chariot 140 peut présenter, dans le sens de la longueur du dispositif auxiliaire 100 et/ou de la perche 130, une section transversale essentiellement en forme de "C".

Le chariot 140 peut comprendre un cadre comprenant des éléments tubulaires reliés les uns aux autres.

Le cadre peut être un cadre rectangulaire et/ou peut constituer un berceau du chariot 140. Le cadre peut présenter deux éléments de support de roues 142 et au moins deux roues 142.

Ledit berceau peut être constitué de deux tubes qui s'emmanchent coulissant dans les extrémités des traverses en C et de lumières transversales sur les extrémités pour le passage de goupilles de fixation aux fins de permettre d'ajuster la longueur du berceau aux divers outils du dispositif auxiliaire outil.

Les traverses transversales du berceau comportent préférentiellement des renfoncements ou conformités de surface, inclinés formant rampes de guidages des éléments d'accrochages du carénage du boitier de l'outil 120, 120A qui lui font face au repos, au décollage/attelage comme à l'atterrissage/dépose de l'outil 120, 120A ; lesquelles opérations sont réalisables tant manuellement, que télécommandés ou prises en compte par le pilote du drone 20.

Le chariot 140 peut comporter en périphérie interne du berceau deux bras latéraux conformés en Z, solidaires mobile en rotation des ailes de la traverse inférieure du berceau.

Les extrémités des bras Z dirigés vers l'extérieur du berceau constituent les axes et palier des roues 142 du chariot ainsi que la butée de rotation de ces derniers sur la traverse et lorsque ces bras se présentent en quasi-alignement avec le cadre du berceau.

Les extrémités des bras Z dirigés vers l'intérieur du berceau comportent les organes de fixation (sorte de boutonnière) qui s'emboitent sur des plots de solidarisation du chariot 140 de l'outil 120, 120A ; mode fixation par emboitement du plot passant un évidement semi circulaire de la paroi de l'organe de fixation du bras Z mobile en rotation par rapport au chariot 140 et par rapport à l'outil 120, 120A.

Le verrouillage de l'outil 120, 120A sur le berceau se fait par gravité lors de la dépose avec la masse de l'outil 120, 120A exerçant une pression sur les fixations qui transmettent celle-ci aux bras lesquels par rotation s'alignent sur le berceau en déplaçant ladite lumière vers le sol.

Le déverrouillage à l'inverse se fait lors de l'enlèvement (la levée) de l'outil 120, 120A par gravité en mettant à profit la masse du chariot 140 qui exerce une traction sur les fixations dont la rotation induite va présenter les lumières dans le sens opposé à celle au repos et permettre aux plots de solidarisation 121E de s'échapper des évidements 144 semi circulaires.

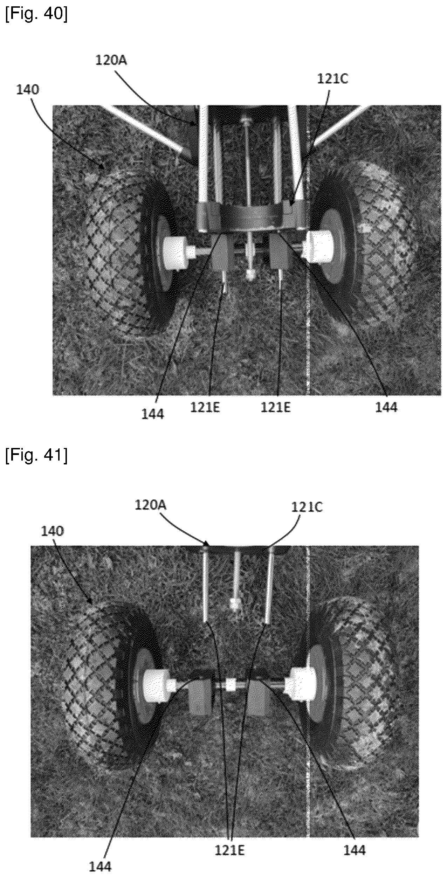

Le verrouillage et le déverrouillage est par exemple illustré par les figures 40 et 41.

La description levée de l'outil 120, 120A, manuelle ou avec le drone 20 : la position des roues 142 est à l'extérieur du berceau coté traverse inférieure, la levée de l'outil 120, 120A va tout d'abord déplacer le chariot 140 au sol sur ses roues 142 pour obtenir le désengagement progressif des barres transversales du berceau des gorges des lumières des platines d'ancrage de l'outil 120, 120A et suivi du désengagement des plots de la fixation des bras en Z. Le berceau du chariot 140 qui est sensiblement à la verticale des roues 142 bascule au sol et les roues 142 sont dès lors dirigées vers la traverse supérieure du berceau et positionnées à l'extérieur des tubes latéraux du berceau. Cette position est la position d'accueil pour la dépose de l'outil 120, 120A.

La dépose de l'outil 120, 120A, manuelle ou avec le drone 20, consiste à amener les crochets des platines coté libre (outil) et les asseoir sur la traverse supérieure du berceau qui agira comme un axe de rotation pour l'outil 120, 120A qui bascule ses deux autres platines coté perche 130 au contact de la traverse inférieure du berceau. Les rampes des crochets vont guider l'outil 120, 120A tandis que les conformités vont réaliser le centrage de l'outil 120, 120A sur le berceau. Ce faisant les plots d'ancrage se positionnent au droit des lumières semi circulaires des fixations des bras en z et s'y positionnent.

Une fois la perche 130 déconnectée, elle est repliée et logée parallèlement au carénage de l'outil 120, 120A, l'opérateur soulève le chariot 140 par la traverse supérieure et bascule les roues 142 vers l'extérieur de la traverse inférieure ; verrouillant ainsi les fixations partant l'outil 120, 120A sur le berceau.

L'ensemble constitué par le dispositif auxiliaire 100 pourvu d'un tel chariot 140 est mobile apte au transport.

Le chariot 140 peut être ajustable dans sa longueur pour permettre son utilisation avec des dispositifs auxiliaires 100 pourvus de différents outils.

Le chariot 140 peut comprendre au moins une roue 142, de préférence une roue souple, sur laquelle repose le chariot 140 dans la position horizontale du dispositif auxiliaire 100. La roue 142 ou les roues 142 peut/peuvent être une roue pneumatique.

Le chariot 140 peut présenter une forme de ski. Le chariot 140 présentant la forme de ski peut être équipé de roulettes et/ou de roues pneumatiques permettant le décollage et l'atterrissage avec le dispositif auxiliaire 100.

Le chariot 140 peut être pourvu d'un vérin pneumatique permettant son déploiement.

Préférentiellement, le chariot 140 peut en outre être adapté pour permettre la préhension de grosses branches afin d'optimiser la coupe de l'arbre et/ou pour permettre la saisie d'une touffe de branchage feuillue de l'arbre afin d'optimiser le volume de coupe. Le système d'accueil et de guidage 124 peut consister en l'ensemble chariot 140 / vérin pneumatique.

Le chariot 140 peut être rendu solidaire inamovible de l'outil, par exemple pour faciliter son transport sur site par drone 20 si besoin.

Le chariot 140 amovible permet d'effectuer un décollage de l'ensemble drone-outil 10, le chariot 140 se libérant par gravité lorsque le dispositif auxiliaire 100 quitte le sol.

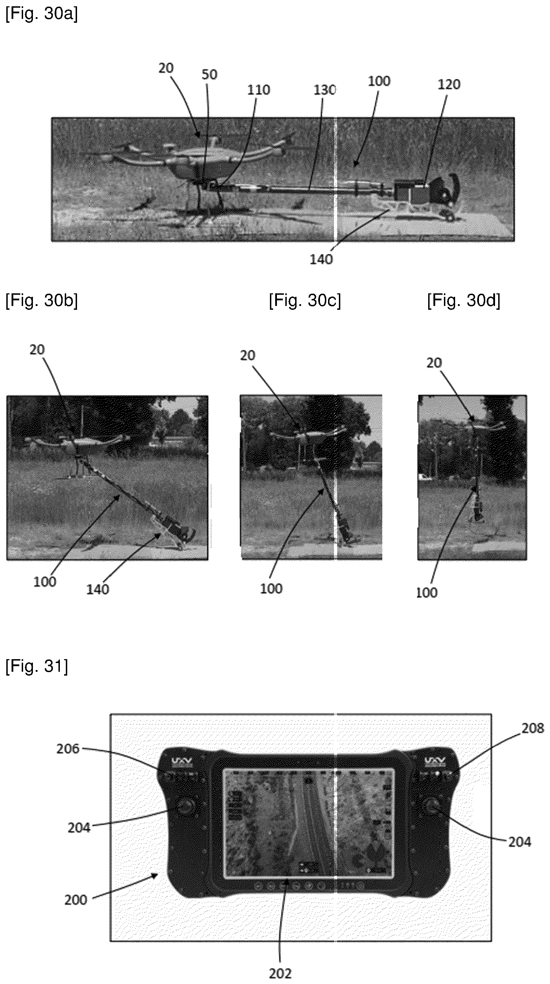

L'utilisation chariot 140 amovible de type ski permet la protection de l'outil du dispositif auxiliaire 100 pour les phases de décollage et d'atterrissage. Le chariot 140 amovible peut rester en place sur le dispositif auxiliaire 100 pendant tout le vol et la mission. Les figures 30A à 30D illustrent un procédé de décollage d'un ensemble drone-outil 10 pourvu d'un dispositif auxiliaire 100 muni d'un tel chariot 140 amovible de type ski.

Le chariot 140 selon une autre variante est divulgué dans les figures 23 et 24. Le chariot 140 est un dispositif qui permet de faciliter le décollage de l'ensemble drone-outil 10. Lorsque l'ensemble drone-outil 10 décolle du sol, le drone 20 tire le chariot 140 le long du sol dans une première phase de décollage de l'ensemble drone-outil 10. Arrivé en position verticale, le chariot 140 peut se désolidariser automatiquement de l'outil du dispositif auxiliaire 100 par gravité. Des encoches 125 permettent à l'outil du dispositif auxiliaire 100 de reposer sur le chariot 140. Le chariot 140 peut également être utilisé pour les phases de mises en place avant le décollage de l'ensemble drone-outil 10. Des grandes roues permettent une mise en œuvre sur un terrain accidenté.

Lorsqu'un tel chariot 140 amovible est utilisé pour le décollage de l'ensemble drone-outil 10, plusieurs méthodes pour permettre l'atterrissage de l'ensemble drone-outil 10 :
- Dépose du dispositif auxiliaire 100 dans un réceptacle puis atterrissage du drone 20 sans le dispositif auxiliaire 100 ;
- Récupération du dispositif auxiliaire 100 par un personnel puis atterrissage du drone 20 sans le dispositif auxiliaire 100 ;
- Mise en place du chariot 140 amovible par un personnel durant une phase stationnaire de l'ensemble drone-outil 10, puis atterrissage du drone 20 avec le dispositif auxiliaire 100.

Le drone 20 peut être piloté pour un arrimage du dispositif auxiliaire 100 en attente au sol. De la même manière, le drone 20 peut déposer le dispositif auxiliaire 100 au sol et ensuite déverrouiller le dispositif d'arrimage 50 pour la dépose du dispositif auxiliaire 100.

Le drone 20 peut en outre comprendre un dispositif de connexion 60 apte à être relié à un moyen de connexion 114 du dispositif auxiliaire 100 lorsque le dispositif d'arrimage 50 est fixé au moyen d'arrimage 110.

En outre, le dispositif auxiliaire 100 peut en outre comporter un moyen de connexion 114 apte à être relié à un dispositif de connexion 60 du drone 20 lorsque le dispositif d'arrimage 50 est fixé au moyen d'arrimage 110.

Le dispositif de connexion 60 et le moyen de connexion 114 peuvent permettre l'établissement d'un lien de communication entre le drone 20 et le dispositif auxiliaire, en particulier entre le moyen de pilotage 22 du drone 20 et le système de commande 102 du dispositif auxiliaire 100. Le lien de communication peut être automatiquement établi lorsque le moyen d'arrimage 110 est fixé de manière réversible au dispositif d'arrimage 50. Inversement, le lien de communication peut être automatiquement rompu lorsque le moyen d'arrimage 110 est détaché du dispositif d'arrimage 50.

Le lien de communication peut être un lien de communication filaire ou non-filaire. Dans le cas où le lien de communication est filaire, le dispositif de connexion 60 et le moyen de connexion 114 peuvent comporter une connectique filaire permettant une connexion filaire automatique, lorsque le moyen d'arrimage 110 est fixé de manière réversible au dispositif d'arrimage 50. La connectique filaire peut être une connectique filaire blindée permettant une connexion filaire automatique blindée. Dans le cas où le lien de communication est non-filaire, le dispositif de connexion 60 et le moyen de connexion 114 peuvent chacun comporter un émetteur-récepteur par radiofréquence, de préférence un émetteur-récepteur Wifi. De façon alternative, l'émetteur-récepteur peut faire partie du moyen de pilotage 22 du drone 20. Du côté du dispositif auxiliaire 100, l'émetteur-récepteur peut faire partie du système de pilotage du dispositif auxiliaire 100.

Le drone 20 peut comporter un moyen de déconnexion d'urgence permettant la déconnexion du moyen de connexion 114 du dispositif de connexion 60. Le drone 20 peut en outre comporter un moyen de crash d'urgence permettant au drone 20 de se poser en urgence sur le sol lorsque le moyen de crash d'urgence est activé.

Le dispositif de connexion 60 et le moyen de connexion 114 peuvent permettre l'établissement d'un lien de communication entre le moyen de commande du drone 20 et le système de commande 102 du dispositif auxiliaire 100.

Ce lien de communication peut permettre la transmission de commandes entre le moyen de commande du drone 20 et le système de commande 102 du dispositif auxiliaire 100.

Le système filaire comportant le dispositif de connexion 60 et le moyen de connexion 114 permet le largage du dispositif auxiliaire 100. Rompre la fixation du moyen d'arrimage 110 au dispositif d'arrimage 50 lorsque le drone est dans les airs permet de détacher le dispositif auxiliaire 100 du drone 20, le dispositif auxiliaire 100 se rapprochant du sol / s'éloignant du drone 20 par effet de gravité, ce qui permet de rompre la connexion entre le dispositif de connexion 60 et le moyen de connexion 114, détachant le moyen de connexion 114 du dispositif de connexion 60 sous l'effet de la gravité.

De façon préférentielle, le dispositif auxiliaire 100 peut être pourvu d'un câble de libération 104 relié d'une part à la perche 130 et d'autre part au moyen de connexion 114. Le câble de libération 104 permet une déconnection automatique sous l'effet du poids lors de la désolidarisation du dispositif auxiliaire 100 du drone 20. Le câble de libération 104 peut être solidaire du dispositif auxiliaire 100 et/ou de la perche 130.

Lors de l'ouverture du dispositif d'arrimage 50, le poids du dispositif auxiliaire 100 permet d'effectuer une traction sur le moyen de connexion 114 par le biais du câble de libération 104 pour détacher le moyen de connexion 114 du dispositif de connexion 60 sous l'effet de la gravité.

De façon alternative, un système de communication par radiofréquence permet d'établir le lien de communication permettant la transmission de commandes entre le moyen de commande du drone 20 et le système de commande 102 du dispositif auxiliaire 100.

Ainsi, le passage en mode radio permet de supprimer toutes liaisons filaires entre le drone 20 et le dispositif auxiliaire 100. Ceci permet notamment d'établir une redondance dans les liaisons radios en cas de perturbations électromagnétiques.

Le dispositif de connexion 60 et le moyen de connexion 114 peuvent constituer une prise male ou une prise femelle. Selon le mode de réalisation préféré de l'invention, le moyen de connexion 114 constitue la partie mâle et le dispositif de connexion 60 la partie femelle.

Le dispositif de connexion 60 et/ou le moyen de connexion 114 peuvent comporter des contacteur/positionneurs magnétiques. Ces contacteur/positionneurs magnétiques permettent d'éviter les faux contacts et d'éviter les ruptures des conducteurs du dispositif de connexion 60 et/ou du moyen de connexion 114 lors de largage ou décrochage du dispositif auxiliaire 100 du drone 20. Un tel contacteur/positionneurs peut s'appuyer sur le même principe employé pour des prises de smartphone par exemple.

Lors de l'ouverture du dispositif d'arrimage 50, le poids du dispositif auxiliaire 100 permet d'effectuer une traction sur le câble de libération 104 de la prise mâle qui désolidarise automatiquement la prise mâle de la prise femelle.

Le dispositif d'arrimage 50, le moyen d'arrimage 110 et la capacité d'emport du drone 20 permet une grande flexibilité pour l'utilisation de différents dispositifs auxiliaires 100 pourvus de différents outils 120, 120A. Des outils 120, 120A ont donc été développés pour permettre différentes actions à proximité d'un réseau sous-tension.

La coque de protection 121 a pour fonction de protéger le moteur électrique 116, la batterie électrique 118 et le système de commande 102 du dispositif auxiliaire 100. La coque de protection 121 permet également d'établir la jonction entre la perche 130 et/ou le deuxième tronçon 138 et l'outil 120. La coque de protection 121 comporte des encoches 125 permettant la réception d'une partie du châssis du chariot 140.

La coque de protection 121 peut en outre être pourvue d'un capot de protection ajouré sur sa partie supérieure pour permettre le refroidissement du moteur électrique 116. La coque de protection 121 peut en outre être pourvue d'une prise 127 permettant l'alimentation d'une caméra.

Une image prise par la caméra peut être affiché sur l'écran d'affichage 202 de la première télécommande 200 et/ou sur l'écran d'affichage de la deuxième télécommande 300.

Sur la partie inférieure de la coque de protection 121, une grille d'aération est présente pour permettre le refroidissement du système de commande 102 du dispositif auxiliaire 100. La coque de protection 121 peut en outre être pourvue d'un moyen de fixation tel qu'une bande de velcro 123 pour la mise en place d'une caméra, d'un détecteur thermique et/ou d'un indicateur visuel lumineux tel qu'une jauge de charge, par exemple. En outre, la coque de protection 121 peut comporter des moyens d'attache d'un moyen de transport, préférentiellement constitués par des platines latérales reliées deux à deux par des entretoises, et solidarisées fixes aux deux extrémités de la coque de protection 121, à savoir, du côté de la perche 120 d'une part et d'autre part du côté de l'outil d'élagage 120.

Ces platines peuvent comporter des lumières ouvertes inclinées vers l'extrémité libre de l'outil d'élagage 120 formant rampe d'accueil d'éléments du chariot 140 (traverses du berceau). Les lumières peuvent chacune constituer crochet d'accrochage des traverses et/ou un moyen de positionnement de l'outil d'élagage 120 sur le berceau du chariot 140.

Un logement 118A pour loger la batterie électrique 118 peut être aménagé dans la coque de protection 121.

La coque de protection 121 peut comprendre un logement recevant la deuxième extrémité 134 de la perche 130 pour relier la perche 130 à la coque de protection 121. La liaison de ladite coque de protection 121 peut être rendue mobile en rotation autour de la direction, le long de laquelle s'étend essentiellement la perche 130, aux fins, par exemple de cas de pilotage plus ou moins automatiques ou programmés, d'ajustements d'attaques ponctuelles sans obliger le pilote de modifier les plans de vol à ces instants précis d'exécution.

En particulier, la coque de protection 121 peut être rendue mobile en rotation autour d'un plan horizontal perpendiculaire à la direction, le long de laquelle s'étend essentiellement la perche 130. Ladite rotation de la coque de protection 121 autorise un basculement de la coque de protection 121 pour une mise en biais ou un positionnement horizontal du plan de coupe de la scie 122 pour des coupes appropriées requises lors des opérations d'élagage vertical ou inclinés ou lors des opérations d'écimage/écrêtage selon les exigences du chantier.

La coque de protection 121 peut comporter une pluralité de lumières et/ou une pluralité de goupilles, les goupilles étant de préférence logées dans les lumières de sorte à bloquer la coque de protection 121 dans son orientation et/ou sa position par rapport à la perche 130.

De façon alternative, le dispositif auxiliaire 100 peut comporter une pluralité de micromoteurs agencés dans la coque de protection 121, de préférence à proximité de la liaison entre la perche 130 et l'outil d'élagage 120. Les micromoteurs sont agencés et configurés pour déplacer l'outil 120 dans son orientation et/ou sa position par rapport à la perche 130. Les micromoteurs peuvent être solidaires à la perche 130.

Les micromoteurs peuvent en outre être reliés à la coque de protection 121 au moyen de platines (bras ou compas) de liaisons compas courbes à encoches emboitables sur des plots de positionnement agencés sur la coque de protection 121 aptes à se déboiter automatiquement par un va et vient (push-pull) commandé ; ces bras et plots peuvent se situer chacun sur une des faces de la coque de protection 121 parallèles au plan de la scie 122.

La coque de protection 121 peut être réalisée en un matériau composite, fibre de verre ou carbone préformé. La coque de protection 121 peut comporter deux demi-coques. L'une demi-coque parmi les deux demi-coques peut être pourvue d'une feuillure d'accouplement et l'autre demi-coque parmi les deux demi-coques peut être pourvue d'une rainure. La feuillure peut s'emboîter dans la rainure. Ces caractéristiques permettent d'assurer les étanchéités requises par les équipements agencés dans la coque de protection 121.

La coque de protection 121 peut comporter des grilles d'aération agencés à proximité des composants électroniques et/ou du moteur 116 de l'outil d'élagage 120. Chaque grille d'aération peut être conformée pour éviter autant des infiltrations ou projections dans les compartiments requérant de telles précautions.

L'outil d'élagage 120 peut recevoir trois types de batterie électrique 118 en fonction de l'autonomie recherchée et du poids disponible avec les différents accessoires qui peuvent être ajoutés. Les trois types de batterie électrique 118 d'une tension de 36 V sont disponibles dans le commerce. Chaque batterie électrique 118 peut comporter une jauge d'autonomie permettant de connaître l'état de la batterie électrique 118. L'alimentation de la scie 122 peut être totalement séparée de l'alimentation du drone 20 pour des raisons de sécurité. Un couvercle avec une vis permet le maintien de la batterie électrique 118 dans son logement.

L'outil d'élagage 120 permet de recevoir différents types de scies circulaires 122 d'un diamètre de 230mm. L'alésage peut être de 22 mm à 23mm. Des modifications de l'outil d'élagage 120 avec courroie permettent la mise en place d'un disque de coupe jusqu'à 400mm. Le disque est fixé sur l'axe d'entrainement par l'intermédiaire d'une cloche.

Tous les systèmes électriques et ou électromécaniques du drone 20, du dispositif auxiliaire 100 et/ou de l'ensemble drone-outil 10, tels que le moyen de pilotage 22 du drone 20, le moyen de commande du drone 20, le système de commande 102 du dispositif auxiliaire 100 et/ou les unités de commande du dispositif auxiliaire 100 peuvent être redondants pour permettre l'application sécurité programmée.

Ces redondances permettent les mises en sécurité d'urgence en cas de défaillance accidentelle du drone 20, du dispositif auxiliaire 100 et/ou de l'ensemble drone-outil 10. Un opérateur manipulateur assiste le pilote du drone 20 via des commandes harmonisées et synchronisées automatiquement, le cas échéant avec droit d'urgence à l'un ou l'autre selon les circonstances des imprévus sur le dispositif auxiliaire 100 portant l'outil ou le drone 20.

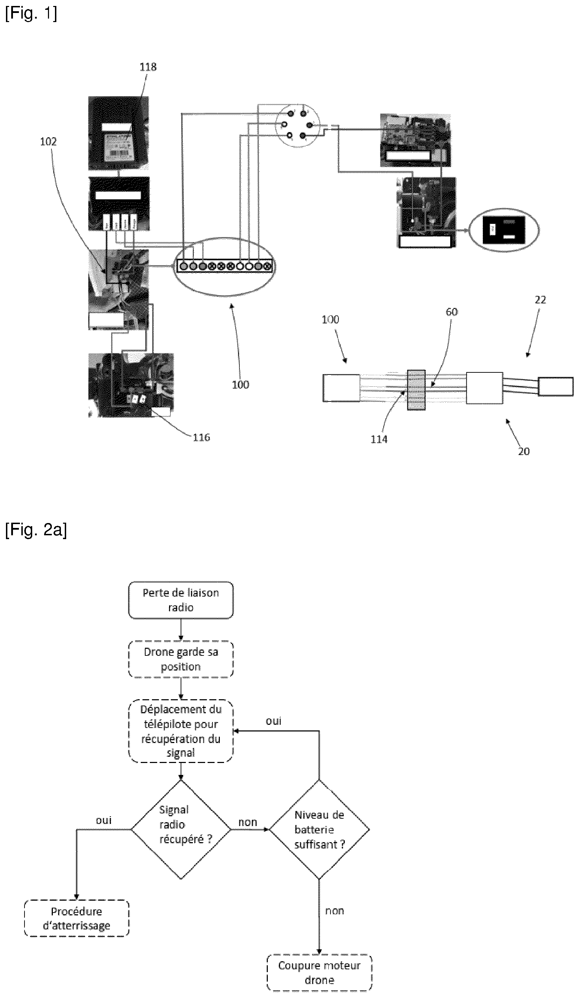

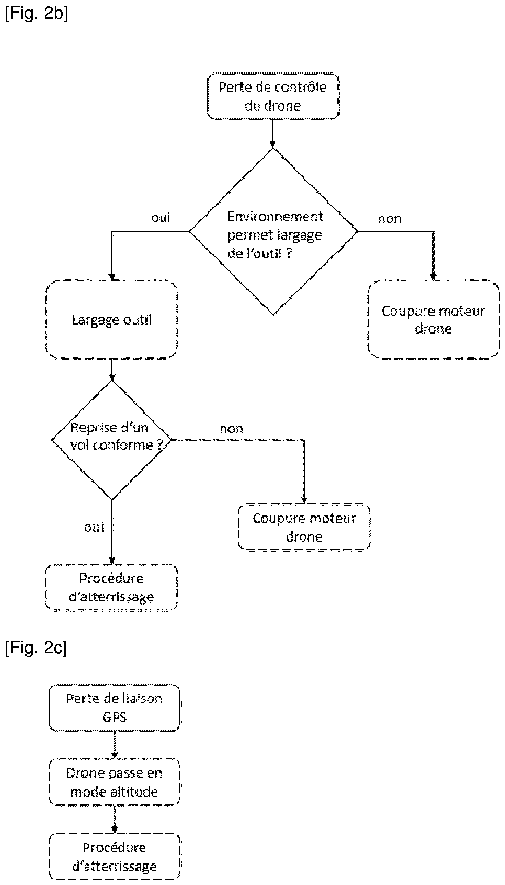

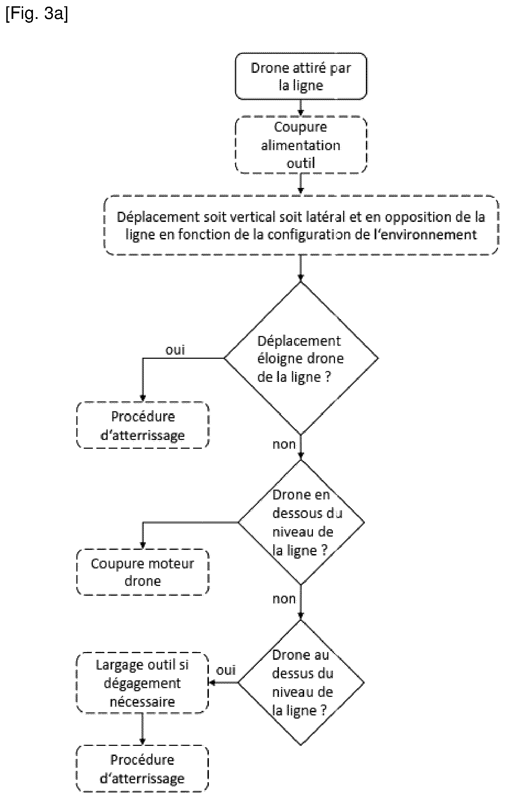

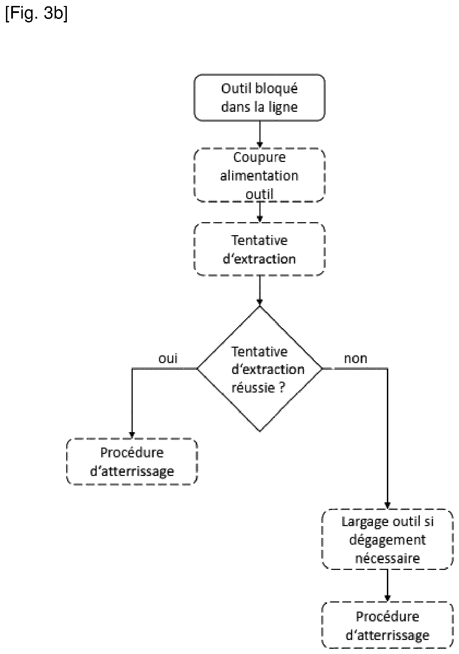

Les figures 2a à 3c représentent des situations ainsi que des actions du drone 20 et/ou de l'ensemble drone-outil 10 automatiques ou induites par le pilote/l'opérateur de l'outil. Dans les figures 2a à 3c, les situations sont encadrées d'une ligne continue tandis que les actions induites par le pilote/l'opérateur de l'outil sont encadrés d'une ligne discontinue.

Lorsqu'une liaison radio entre la première télécommande 200 permettant au pilote de manœuvrer le drone 20 et le drone 20 est rompue, par exemple lorsque le drone 20 se trouve hors de la portée d'un signal radio émis par la première télécommande 200, le drone 20, notamment le moyen de pilotage 22 du drone 20, peut être configuré pour maintenir le drone 20 dans sa position, le télépilote détenant la première télécommande 200 se déplaçant de préférence pour se rapprocher du drone 20, jusqu'à ce que la liaison radio soit rétablie.

Lorsque, pendant que la liaison radio est rompue, un niveau de batterie de la batterie du drone descend en dessous d'un seuil prédéfini, le drone 20 peut déclencher l'atterrissage en urgence du drone 20 et/ou de l'ensemble drone-outil 10.

Lorsqu'une perte de contrôle du drone 20 et/ou de l'ensemble drone-outil 10 par le pilote est détectée, le dispositif auxiliaire 100 peut être automatiquement largué. Lorsque le contrôle du drone 20 est rétabli suite au largage du dispositif auxiliaire 100, le drone peut être atterri par le pilote. Si le contrôle du drone 20 suite au largage du dispositif auxiliaire 100 ne peut être rétabli, le drone 20 peut déclencher l'atterrissage en urgence du drone 20.

Lorsqu'une perte du signal GPS au niveau du récepteur GPS du drone 20 et/ou de l'ensemble drone-outil 10 est détectée, le drone 20 et/ou l'ensemble drone-outil peut/peuvent passer dans un mode « altitude », dans lequel le drone 20 et/ou l'ensemble drone-outil 10 est/sont automatiquement piloté pour atteindre une altitude, dans laquelle le drone 20 et/ou l'ensemble drone-outil 10 ne sont pas susceptibles de heurter un obstacle, par exemple à une altitude se trouvant au-dessus de la hauteur des lignes **HTA** et **HTB** et/ou des couronnes des arbres. Le pilote peut ensuite procéder à un atterrissage manuel du drone 20 et/ou de l'ensemble drone-outil 10.

Lorsque le dispositif auxiliaire 100 et/ou l'ensemble drone-outil 10 se rapproche(nt) de la ligne et se retrouve(nt) à une distance de la ligne qui est en dessous d'une distance minimale, le système de commande du dispositif auxiliaire 100 peut être configuré pour couper l'alimentation en énergie de l'outil.

Successivement ou simultanément, l'ensemble drone-outil 10 peut être éloigné de la ligne, soit par un déplacement latéral dans la direction opposé à la ligne du drone 20 et/ou de l'ensemble drone-outil 10, soit par un déplacement vertical du drone 20 et/ou de l'ensemble drone-outil 10.

Si le drone 20 et/ou l'ensemble drone-outil 10 est éloigné avec succès de la ligne, le drone 20 et/ou l'ensemble drone-outil 10 peut procéder à un atterrissage automatique. Si, suite au déplacement, le drone 20 et/ou l'ensemble drone-outil 10 se trouvent en dessous du niveau de la ligne, le moteur du drone 20 peut être coupé pour déclencher un atterrissage forcé. Si, suite au déplacement, le drone 20 et/ou l'ensemble drone-outil 10 se trouvent au-dessus du niveau de la ligne, le lien entre le dispositif d'arrimage 50 et le moyen d'arrimage 110 peut être rompu afin de larguer le dispositif auxiliaire 100. Ensuite, la procédure d'atterrissage du drone 20 peut être déclenchée.

Dans le cas où l'outil du dispositif auxiliaire 100 est bloqué dans la ligne, l'alimentation en énergie électrique de l'outil peut être coupée et le drone 20 peut tenter l'extraction du dispositif auxiliaire 100 de la ligne. Si le dispositif auxiliaire 100 est extrait de la ligne avec succès, le drone 20 et/ou l'ensemble drone-outil 10 peut déclencher la procédure d'atterrissage du drone 20 et/ou de l'ensemble drone-outil 10. Dans le cas où le dispositif auxiliaire 100 ne peut pas être extrait de la ligne, le lien entre le dispositif d'arrimage 50 et le moyen d'arrimage 110 peut être rompu afin de larguer le dispositif auxiliaire 100, avant de procéder à l'atterrissage du drone 20.

Dans le cas où l'outil du dispositif auxiliaire 100 est bloqué dans un arbre, l'ensemble drone-outil 10 peut être déplacé, horizontalement et/ou verticalement, afin de tenter l'extraction de l'outil du dispositif auxiliaire 100 de l'arbre. Cette tentative d'extraction peut continuer tant que le niveau de la batterie du drone 20 est au-dessus d'un seuil minimum de batterie suffisant pour assurer le fonctionnement du drone 20. Lorsque ce seuil minimum de batterie est atteint, le lien entre le dispositif d'arrimage 50 et le moyen d'arrimage 110 peut être rompu afin de larguer le dispositif auxiliaire 100. Ensuite, le drone 20 peut procéder à un atterrissage avec le niveau de batterie restant.

Préférentiellement, le pilote du drone 20 peut avoir la main sur le drone et peut piloter l'arrimage/le largage du dispositif auxiliaire 100 avec la première télécommande 200 du drone 20. La première télécommande 200 peut afficher une image prise par la caméra du drone 20 et/ou la caméra du dispositif auxiliaire 100 au pilote sur l'écran d'affichage 202.

L'opérateur de l'outil du dispositif auxiliaire 100 peut avoir la main sur le dispositif auxiliaire 100 et peut également piloter l'arrimage/ le largage du dispositif auxiliaire 100 avec une console dédiée au pilotage du dispositif auxiliaire 100 et de l'outil du dispositif auxiliaire 100. Ce pilotage du dispositif auxiliaire 100 par l'opérateur peut permettre d'améliorer la sécurité et l'exécution correcte des travaux d'une part et d'autre part coordonner l'outil avec les manœuvres du drone 20, sachant que les automatismes de sécurité pallient aux défaillances des opérateurs et aux incidents climatiques ou physiques, tel qu'un accrochage du drone 20 ou que la génération d'un arc électrique.

Dans un mode préférentiel, le lien de communication non-filaire entre le dispositif de connexion 60 et le moyen de connexion 114 affranchit la contrainte de limitation de longueur potentielle du dispositif auxiliaire 100 à celle de la longueur des câblages blindés. Ce mode préférentiel facilite donc la réalisation télescopique de la perche 130 et permet d'augmenter l'amplitude de son déploiement. 1

## Revendications

1. Ensemble drone-outil comprenant d'une part un drone (20) comportant un châssis (30), au moins deux rotors (40) reliés au châssis (30) et un moyen de pilotage (22) relié au châssis (30) et pourvu d'un moyen de commande apte à commander les au moins deux rotors (40), le drone (20) comportant en outre un dispositif d'arrimage (50) apte à être fixé de manière réversible à un moyen d'arrimage (110) d'un dispositif auxiliaire (100), le dispositif d'arrimage (50) étant soit un verrou d'arrimage électromagnétique (52) apte à recevoir un crochet d'arrimage (112) du moyen d'arrimage (110) de manière réversible, soit un crochet d'arrimage apte à être reçu dans un verrou d'arrimage électromagnétique du moyen d'arrimage (110) de manière réversible, et d'autre part un dispositif auxiliaire comportant un moyen d'arrimage (110) pourvu soit d'un crochet d'arrimage (112) apte à être reçu de manière réversible dans le verrou d'arrimage électromagnétique (52), soit d'un verrou d'arrimage électromagnétique apte à recevoir le crochet d'arrimage du dispositif d'arrimage (50) de manière réversible, le dispositif auxiliaire (100) comprenant en outre un outil, de préférence un outil d'élagage (120) ou un outil de dépôt d'un agent antigivre, **caractérisé en ce que** le dispositif auxiliaire (100) comporte en outre un chariot (140) sur lequel repose l'outil et/ou une perche (130) en une position horizontale du dispositif auxiliaire (100).

2. Ensemble drone-outil selon la revendication 1, **caractérisé en ce que** le verrou d'arrimage électromagnétique (52) du drone comporte un pêne (54) ainsi qu'un servomoteur (56) apte à déplacer le pêne (54) entre une position ouverte, dans laquelle le crochet d'arrimage (112) est déverrouillé, et une position fermée, dans laquelle le crochet d'arrimage (112) est verrouillé.

3. Ensemble drone-outil selon l'une quelconque des revendications 1 ou 2, **caractérisé en ce que** le drone comporte en outre un dispositif de connexion (60) apte à être relié à un moyen de connexion (114) du dispositif auxiliaire (100) lorsque le dispositif d'arrimage (50) est fixé au moyen d'arrimage (110).

4. Ensemble drone-outil selon la revendication 1, **caractérisé en ce que** le verrou d'arrimage électromagnétique du dispositif auxiliaire comporte un pêne ainsi qu'un servomoteur apte à déplacer le pêne entre une position ouverte, dans laquelle le crochet d'arrimage du dispositif d'arrimage (50) est déverrouillé, et une position fermée, dans laquelle le crochet d'arrimage du dispositif d'arrimage (50) est verrouillé.

5. Ensemble drone-outil selon la revendication précédente, **caractérisé en ce que** le dispositif auxiliaire comporte en outre un moyen de connexion (114) apte à être relié à un dispositif de connexion (60) du drone (20) lorsque le dispositif d'arrimage (50) est fixé au moyen d'arrimage (110).

6. Ensemble drone-outil selon l'une quelconque des revendications précédentes, **caractérisé en ce que** le moyen d'arrimage est agencé sur une première extrémité (132) de la perche (130).

7. Ensemble drone-outil selon la revendication 6, **caractérisé en ce que** l'outil est agencé sur une deuxième extrémité (134) de la perche (130), opposée à la première extrémité (132).

8. Ensemble drone-outil selon l'une quelconque des revendications précédentes, **caractérisé en ce que** la perche (130) est une perche télescopique.

9. Ensemble drone-outil selon l'une quelconque des revendications précédentes, **caractérisé en ce que** la perche (130) est au moins partiellement fabriquée en un matériau composite et/ou isolant, de préférence en fibre de verre.

10. Procédé de pilotage d'un ensemble drone-outil (10) selon l'une des revendications précédentes, **caractérisé en ce qu'**il comporte une étape d'arrimage consistant à fixer le dispositif d'arrimage (50) du drone (20) au moyen d'arrimage (110) du dispositif auxiliaire (100), le crochet d'arrimage (112) étant reçu de manière réversible dans le verrou d'arrimage électromagnétique (52).

11. Procédé de pilotage selon la revendication précédente, **caractérisé en ce qu'**il comporte une étape de largage du dispositif auxiliaire (100) consistant à détacher le dispositif d'arrimage (50) du drone (20) du moyen d'arrimage (110) du dispositif auxiliaire (100), le crochet d'arrimage (112) étant lâché du verrou d'arrimage électromagnétique (52).

## Patentansprüche

1. Drohnen-Werkzeug-Anordnung, umfassend einerseits eine Drohne (20), umfassend ein Chassis (30), wenigstens zwei mit dem Chassis (30) verbundene Rotoren (40) und eine mit dem Chassis (30) verbundene Steuervorrichtung (22), versehen mit einer zur Bedienung der wenigstens zwei Rotoren (40) geeigneten Bedienvorrichtung, wobei die Drohne (20) ferner eine Feststellvorrichtung (50) umfasst, die reversibel an einem Feststellmittel (110) einer Zusatzvorrichtung (100) befestigt werden kann, wobei die Feststellvorrichtung (50) entweder ein elektromagnetischer Feststellriegel (52) ist, der einen Feststellhaken (112) des Feststellmittels (110) reversibel aufnehmen kann, oder ein Feststellhaken ist, der in einem elektromagnetischen Feststellriegel des Feststellmittels (110) reversibel aufgenommen werden kann, und andererseits umfassend eine Hilfsvorrichtung, umfassend ein Feststellmittel (110), das entweder mit einem Feststellhaken (112) versehen ist, der reversibel in dem elektromagnetischen Feststellriegel (52) aufgenommen werden kann, oder mit einem elektromagnetischen Feststellriegel versehen ist, der den Feststellhaken der Feststellvorrichtung (50) reversibel aufnehmen kann, wobei die Hilfsvorrichtung (100) ferner ein Werkzeug umfasst, bevorzugt ein Baumschnittwerkzeug (120) oder ein Werkzeug zum Aufbringen eines Enteisungsmittels, **dadurch gekennzeichnet, dass** die Hilfsvorrichtung (100) ferner einen Wagen (140) umfasst, auf dem das Werkzeug und/oder eine Stange (130) in einer horizontalen Position der Hilfsvorrichtung (100) aufliegt.

2. Drohnen-Werkzeug-Anordnung nach Anspruch 1, **dadurch gekennzeichnet, dass** der elektromagnetische Feststellriegel (52) der Drohne einen Riegel (54) sowie einen Servomotor (56) umfasst, der den Riegel (54) zwischen einer offenen Position, in der der Feststellshaken (112) entriegelt ist, und einer geschlossenen Position, in der der Feststellshaken (112) verriegelt ist, bewegen kann.

3. Drohnen-Werkzeug-Anordnung nach einem der Ansprüche 1 oder 2, **dadurch gekennzeichnet, dass** die Drohne ferner eine Verbindungsvorrichtung (60) umfasst, die mit einem Verbindungsmittel (114) der Hilfsvorrichtung (100) verbunden werden kann, wenn die Feststellvorrichtung (50) an dem Feststellmittel (110) befestigt ist.

4. Drohnen-Werkzeug-Anordnung nach Anspruch 1, **dadurch gekennzeichnet, dass** der elektromagnetische Feststellriegel der Hilfsvorrichtung einen Riegel sowie einen Servomotor umfasst, der den Riegel zwischen einer offenen Position, in der der Feststellhaken der Feststellvorrichtung (50) entriegelt ist, und einer geschlossenen Position, in der der Feststellhaken der Feststellvorrichtung (50) verriegelt ist, bewegen kann.

5. Drohnen-Werkzeug-Anordnung nach dem vorhergehenden Anspruch, **dadurch gekennzeichnet, dass** die Hilfsvorrichtung ferner ein Verbindungsmittel (114) umfasst, das mit einer Verbindungsvorrichtung (60) der Drohne (20) verbunden werden kann, wenn die Feststellvorrichtung (50) an dem Feststellmittel (110) befestigt ist.

6. Drohnen-Werkzeug-Anordnung nach einem der vorhergehenden Ansprüche, **dadurch gekennzeichnet, dass** die Feststellvorrichtung an einem ersten Ende (132) der Stange (130) angeordnet ist.

7. Drohnen-Werkzeug-Anordnung nach Anspruch 6, **dadurch gekennzeichnet, dass** das Werkzeug an einem zweiten Ende (134) der Stange (130) gegenüber dem ersten Ende (132) angeordnet ist.

8. Drohnen-Werkzeug-Anordnung nach einem der vorhergehenden Ansprüche, **dadurch gekennzeichnet, dass** die Stange (130) eine Teleskopstange ist.

9. Drohnen-Werkzeug-Anordnung nach einem der vorhergehenden Ansprüche, **dadurch gekennzeichnet, dass** die Stange (130) wenigstens teilweise aus einem Verbund- und/oder Isoliermaterial, bevorzugt aus Glasfaser, hergestellt ist.

10. Verfahren zum Steuern einer Drohnen-Werkzeug-Anordnung (10) nach einem der vorhergehenden Ansprüche, **dadurch gekennzeichnet, dass** es einen Feststellschritt umfasst, der darin besteht, die Feststellvorrichtung (50) der Drohne (20) mittels des Feststellmittels (110) der Hilfsvorrichtung (100) zu befestigen, wobei der Feststellhaken (112) reversibel in dem elektromagnetischen Feststellriegel (52) aufgenommen wird.

11. Steuerverfahren nach dem vorhergehenden Anspruch, **dadurch gekennzeichnet, dass** es einen Schritt zum Lösen der Hilfsvorrichtung (100) umfasst, der darin besteht, die Feststellvorrichtung (50) der Drohne (20) von dem Feststellmittel (110) der Hilfsvorrichtung (100) zu lösen, wobei der Feststellhaken (112) aus dem elektromagnetischen Feststellriegel (52) gelöst wird.

## Claims

1. Drone-tool assembly comprising, on the one hand, a drone (20) including a frame (30), at least two rotors (40) connected to the frame (30) and a drive means (22) connected to the frame (30) and provided with a control means capable of controlling the at least two rotors (40), the drone (20) further including a securing device (50) capable of being reversibly attached to a securing means (110) of an auxiliary device (100), the securing device (50) being either an electromagnetic securing lock (52) capable of receiving a securing hook (112) of the securing means (110) reversibly, or a securing hook capable of being received in an electromagnetic securing lock of the securing means (110) reversibly, and on the other hand an auxiliary device including a securing means (110) provided with either a securing hook (112) capable of being received reversibly in the electromagnetic securing lock (52), or an electromagnetic securing lock capable of receiving the securing hook of the securing device (50) reversibly, the auxiliary device (100) further comprising a tool, preferably a pruning tool (120) or a tool for depositing an anti-icing agent, **characterised in that** the auxiliary device (100) further comprises a carriage (140) on which the tool and/or a pole (130) rests in a horizontal position of the auxiliary device (100).

2. Drone-tool assembly according to Claim 1, **characterised in that** the electromagnetic securing lock (52) of the drone includes a bolt (54) and a servomotor (56) capable of moving the latch (54) between an open position, where the securing hook (112) is unlocked, and a closed position, where the securing hook (112) is locked.

3. Drone-tool assembly according to either one of Claims 1 or 2, **characterised in that** the drone further includes a connection device (60) that can be connected to a connection means (114) of the auxiliary device (100) when the securing device (50) is attached to the securing means (110).

4. Drone-tool assembly according to Claim 1, **characterised in that** the electromagnetic securing lock of the auxiliary device includes a bolt and a servomotor capable of moving the bolt between an open position, where the securing hook of the securing device (50) is unlocked, and a closed position, where the securing hook of the securing device (50) is locked.

5. Drone-tool assembly according to the preceding claim, **characterised in that** the auxiliary device further includes a connection means (114) capable of being connected to a connection device (60) of the drone (20) when the securing device (50) is attached to the securing means (110).

6. Drone-tool assembly according to any one of the preceding claims, **characterised in that** the securing means is arranged at a first end (132) of the pole (130).

7. Drone-tool assembly according to Claim 6, **characterised in that** the tool is arranged on a second end (134) of the pole (130), opposite the first end (132).

8. Drone-tool assembly according to any one of the preceding claims, **characterised in that** the pole (130) is a telescopic pole.

9. Drone-tool assembly according to any one of the preceding claims, **characterised in that** the pole (130) is at least partially constructed from a composite and/or insulating material, preferably glass fibre.

10. Method for controlling a drone-tool assembly (10) according to one of the preceding claims, **characterised in that** it includes a securing step involving attaching the securing device (50) of the drone (20) to the securing means (110) of the auxiliary device (100), the securing hook (112) being reversibly received in the electromagnetic securing lock (52).

11. Control method according to the preceding claim, **characterised in that** it includes a step of releasing the auxiliary device (100) involving detaching the securing device (50) of the drone (20) from the securing means (110) of the auxiliary device (100), the securing hook (112) being released from the electromagnetic securing lock (52).
